(19) Europäisches Patentamt
European Patent Office
Office européen des brevets

(11) **EP 2 484 047 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(21) Anmeldenummer: **10754456.1**

(22) Anmeldetag: **08.09.2010**

(51) Int Cl.:
*H04L 9/12* (2006.01)     *H04L 9/18* (2006.01)
*H04L 9/32* (2006.01)     *H04L 29/08* (2006.01)
*H04L 9/08* (2006.01)

(86) Internationale Anmeldenummer:
**PCT/EP2010/063168**

(87) Internationale Veröffentlichungsnummer:
**WO 2011/039037 (07.04.2011 Gazette 2011/14)**

(54) **VERFAHREN ZUM MANIPULATIONSSCHUTZ VON SENSORDATEN UND SENSOR HIERZU**

METHOD FOR PROTECTING SENSOR DATA FROM MANIPULATION, AND SENSOR TO THIS END

PROCÉDÉ DE PROTECTION CONTRE DES MANIPULATIONS DE DONNÉES DE CAPTEUR ET CAPTEUR CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.09.2009 DE 102009045133**

(43) Veröffentlichungstag der Anmeldung:
**08.08.2012 Patentblatt 2012/32**

(73) Patentinhaber: **Robert Bosch GmbH 70442 Stuttgart (DE)**

(72) Erfinder:
- **NEWSOME, James**
  **Pittsburgh, PA 15217 (US)**
- **SZERWINSKI, Robert**
  **12557 Berlin (DE)**
- **HAYEK, Jan**
  **81827 Muenchen (DE)**

(56) Entgegenhaltungen:
**WO-A1-2007/088288     US-A1- 2008 263 647**

- **H. CAM ET AL: "Energy efficient security protocol for wireless sensor networks", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, Bd. 5, 6. Oktober 2003 (2003-10-06), Seiten 2981-2984, XP010702162, DOI: DOI:10.1109/VETECF.2003.1286170 ISBN: 978-0-7803-7954-1**
- **M. BOHGE, W TRAPPE: "An authentication framework for hierarchical ad hoc sensor networks", WISE '03 PROCEEDINGS OF THE 2ND ACM WORKSHOP ON WIRELESS SECURITY, 19. September 2003 (2003-09-19), Seiten 79-87, XP040167946, San Diego, CA, USA ISBN: 1-58113-769-9**

**Beschreibung**

Stand der Technik

Die vorliegende Erfindung betrifft ein Verfahren zu einem Manipulationsschutz von Sensordaten und einen Sensor hierzu.

In der nicht vorveröffentlichten Schrift DE-102009002396 der Anmelderin wird ein Verfahren zum Manipulationsschutz von Sensordaten beschrieben, welches sich dadurch auszeichnet, dass durch die Verknüpfung von Authentifizierung des Sensors und Integritätsschutz der Sensordaten eine Transaktionsauthentifizierung erreicht wird und damit ein stark erhöhter Schutz gegen Manipulation der Sensordaten gewährleistet ist.

In der Schrift "Energy Efficient Security Protocol for Wireless Sensor Networks" von H. Çam u. a., Vehicular Technology Conference, VTC 2003-FALL, Bd. 5, Seiten 2981 bis 2984, veröffentlicht am 6. Oktober 2003, wird ein energiesparendes Sicherheitsverfahren in Sensornetzwerken offenbart.

Offenbarung der Erfindung

Vorteile der Erfindung

Das erfindungsgemäße Verfahren, bzw. der erfindungsgemäße Sensor, ermöglichen es, eine Transaktionsauthentifizierung von Sensordaten zu erreichen, bei welcher auch bei Verlust eines Schlüssels, z.B. durch Seitenkanal-Attacken, der Manipulationsschutz nicht ausgehebelt ist. Damit ergibt sich mit minimalem zusätzlichen Aufwand ein noch robusterer Manipulationsschutz für Sensordaten.

Weitere Vorteile und Verbesserungen ergeben sich durch die Merkmale der abhängigen Ansprüche.

In einer vorteilhaften Ausgestaltung werden die zeitvarianten Parameter in jedem Schritt der Transaktionauthentifizierung verändert. Dieser Vorgang entspricht einem Sequenzzähler und ermöglicht eine besonders enge kryptographische Kopplung der Verfahrensteile Authentifizierung und Transaktionsauthentifizierung, und damit einen weiteren Sicherheitsgewinn. Besonders vorteilhaft, weil besonders einfach umsetzbar, ist, wenn die Veränderung der zeitvarianten Parameter einer schrittweisen Inkrementierung entspricht.

Eine besondere Ausführung geht davon basiert darauf, dass sich ein erster Teil der kryptographischen Authentifizierungsnachricht, welcher im Rahmen des Authentifizierungsverfahren durch Trunkierung aus der kryptographischen Authentifizierungsnachricht generiert und von dem Sensor an das Steuergerät übertragen wird, und der zweite Teil der kryptographischen Authentifizierungsnachricht, welcher zur Berechnung der zeitvarianten Parameter herangezogen wird, nicht überschneiden.

Besonders vorteilhaft ist es, wenn die zeitvarianten Parameter in jedem Schritt der Transaktionsauthentifizierung aus einer Differenz zwischen aus der kryptographischen Authentifizierungsnachricht gewonnenen initialen Parameter und aktuellen Parametern berechnet werden, wobei die aktuellen Parameter durch schrittweise Inkrementierung aus den initialen Parametern hervorgehen. Dadurch wird zu den bisherigen Vorteilen auch eine mögliche Antwort-Trunkierung aus dem Authentifizierungsverfahren nicht geschwächt.

In einem bevorzugten Ausführungsbeispiel wird als Authentifizierungsverfahren ein Challenge-Response-Verfahren herangezogen, welches sich durch besonders hohe Sicherheit auszeichnet. Weiterhin vorteilhaft ist eine Verwendung von MAC-Verfahren zum Integritätsschutz der Sensordaten, welche ebenfalls hohen Sicherheitsstandards genügen, wobei besonders zweckmäßig die extrem sicheren Verfahren EMAC und OMAC sind.

In besonderen Ausgestaltungsformen sind die zeitvarianten Parameter entweder als Zeitstempel, Sequenzzähler oder als Zufallszahlen ausgestaltet. Diese Ausgestaltungen bringen vor allem den Vorteil einer besonders einfachen, aber doch zweckmäßigen Umsetzung des erfindungsgemäßen Verfahrens mit sich.

Zeichnungen

Ausführungsbeispiele der Erfindung sind in den Zeichnungen dargestellt und in der nachfolgenden Beschreibung näher erläutert. Die Zeichnungen sind lediglich beispielhaft und schränken den allgemeinen Erfindungsgedanken nicht ein.

Es zeigen:

Figur 1          eine schematische Darstellung eines Systems zur Authentifizierung eines Sensors A bei einem Steuergerät B mittels eines Challenge-Response-Verfahrens,

Figur 2          eine schematische Darstellung eines Systems zum Integritätsschutz der Sensordaten,

Figur 3          eine schematische Darstellung eines Systems zur Authentifizierung eines Sensors A bei einem Steuergerät B,

Figur 4          eine schematische Darstellung zur Erläuterung einer Reflektionsattacke bei einfacher Authentifizierung,

Figur 5          eine schematische Darstellung zur Erläuterung eines Integritätsschutz der Sensordaten durch Message Authentication Codes EMAC oder CMAC, und

Figuren 6A, 6B      eine schematische Darstellung eines beispielhaften Gesamtprotokolls zur Erläuterung der erfindungsgemäßen Verbindung von Authentifizierung und Integritätsschutz, bzw. Authentifizierung und Transaktionsauthentifizierung, zur Transaktionssicherheit der Sensordaten.

Im Folgenden wird zur Beschreibung der Erfindung wo zweckmäßig auf das Beispiel eines RDS-Sensors und eines Steuergeräts in einem Kraftfahrzeug zurückgegriffen. Dies stellt aber keine Einschränkung der Erfindung auf dieses Beispiel dar, da das beschriebene Sicherheitsgesamtkonzept allgemein für die Sicherheitsgewährleistung der Kommunikation zwischen einem beliebigen Steuergerät und einem Sensor konzipiert ist.

Betrachtet man die Anforderungen an die Absicherung von Kommunikationskanälen, so sind hauptsächlich die folgenden zu betrachten:

(1) [Message authentication] Schutz der Integrität der Daten
(2) [Entity authentication] Sicherstellen der Authentizität der Quelle
(3) [Confidentiality] Schutz der Vertraulichkeit der Daten (optional)

Zusätzlich zu diesen Grundanforderungen werden weitere abgeleitet, die spezielle Angriffstypen erschweren oder verhindern, welche nicht explizit durch die Grundanforderungen abgedeckt sind, aber ihrem Wesen nach implizit angenommen werden. Hier wären u.A. zu nennen:

(a) [Replay protection] Schutz vor Wiedereinspielung von Daten, die zwar integer sind (1), aber bereits schon einmal gesendet wurden.
(b) [Liveliness] Sicherstellen, dass die Quelle zum Zeitpunkt der Übertragung 'am Leben' war, d.h., keine zu einem früheren Zeitpunkt vorausberechneten (oder aufgezeichneten und nicht gesendeten) Daten verwendet wurden.

Im Folgenden wird davon ausgegangen, dass die Daten nicht vertraulich sind, also (3) nicht benötigt wird. Dies kann z.B. bei Sensoren im Fahrzeugbereich der Fall sein. Die DE-102009002396 der Anmelderin hatte Protokolle zur Erreichung von (1), (2) zusammen mit (a) und (b) unter Berücksichtigung der beschränkten Ressourcen (Rechenzeit, Kanalkapazität) zum Inhalt. Die Grundidee ist hierbei der Einsatz eines Message Authentication Codes (MAC) zur Integritätssicherung, der Einsatz eines auf symmetrischer Kryptographie beruhenden ChallengeResponse-Protokolls zur Quellauthentisierung und der Kombination dieser beiden Teile, um Transaktionsschutz zu erreichen. Beide Einzelprotokolle verfügen über jeweils einen eigenen symmetrischen Schlüssel ($K_{mac}$ bzw. $K_{auth}$).

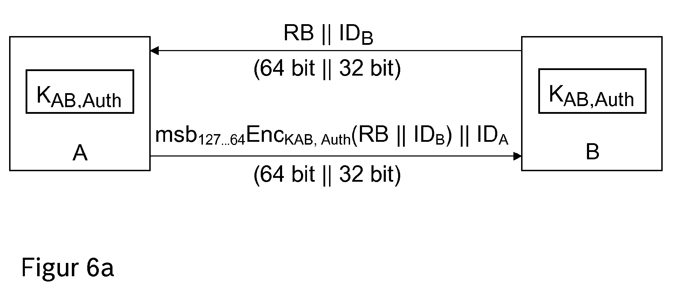

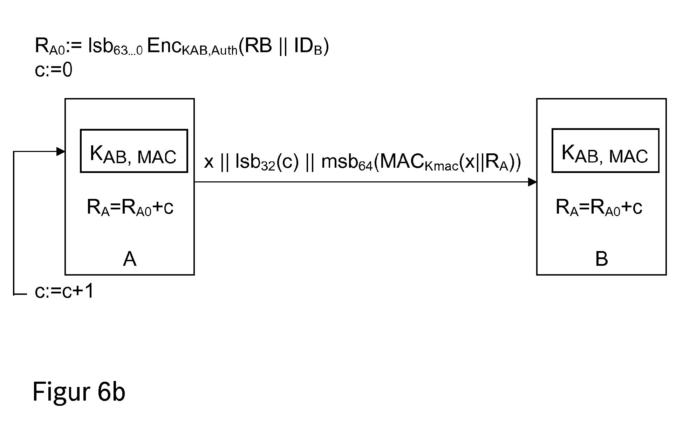

Im Folgenden wird das Verfahren zur erfindungsgemäßen Transaktionsauthentifizierung an einem Ausführungsbeispiel detailliert beschrieben. Während die dabei zuerst vorgestellten Schritte 1-3 des Sicherheitskonzepts weitgehend aus der DE-102009002396 bekannt sind, ergeben sich die bedeutenden Unterschiede im entscheidenden vierten Schritt des erfindungsgemäßen Sicherheitskonzepts, welcher u.a. anhand von Figur 6 erläutert wird und auf einer Verknüpfung von Verfahrensschritten basiert. Um eine feste Bindung der Authentifizierung und des Integritätsschutzes zu erhalten, wird dabei vorgeschlagen, die Zufallszahlen beider Schritte, bzw. wie unten erläutert die zeitvarianten Parameter und die Zufallszahlen, bzw. Nonces (einmalig verwendeten Zahlen) der beiden Schritte, zu verbinden. Man erreicht durch diese Verbindung der beiden Teilschritte Authentifizierung und Integritätsschutz eine enge kryptographische Kopplung beider Teile und spart gleichzeitig noch die Implementierung eines Zufallszahlengenerators auf der Sensorseite ein. Darüber hinaus wird mit dem hier vorgeschlagenen Verfahren bzw. Sensor erreicht, dass auch bei Verlust einer der Schlüssel, z.B. durch eine Seitenkanal-Attacke, der Manipulationsschutz nicht gebrochen wird.

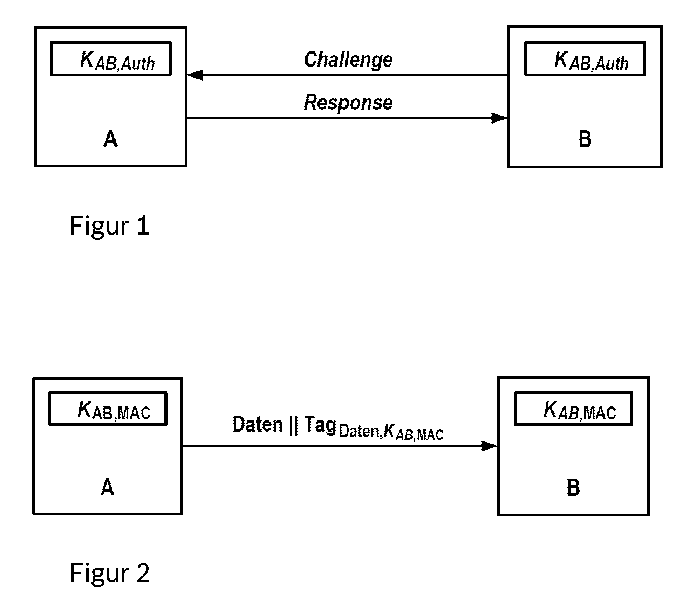

Figur 1 zeigt eine schematische Darstellung eines Systems zur Authentifizierung eines Sensors A bei einem Steuergerät B mittels eines Challenge-Response-Verfahrens. Dabei sendet das Steuergerät B eine Anforderung, "Challenge" an den Sensor B, welcher zur Authentifizierung mit einer Antwort "Response" antwortet. Hierbei wird ein konkretes Verfahren schematisch angezeigt, welches Teil eines übergreifenden Sicherheitskonzeptes ist, welches hohe Sicherheitsanforderungen erfüllt und Angriffe der oben aufgezeigten Typen sowie weitere Sicherheitsbedrohungen und -verletzungen kryptographisch sicher erkennt.

Es handelt sich in einem ersten Schritt um ein Challenge-Response-Verfahren zur Authentifizierung des RDS-Sensors beim Steuergerät ECU. Ziel der Authentifizierung ist es, festzustellen, ob zum Zeitpunkt der Authentifizierung der RDS über ein gültiges Authentifizierungsmerkmal, das heißt Kenntnis eines kryptographischen Schlüssels, verfügt, und dieses Merkmal fest an seine Identität, beispielsweise eine Seriennummer, zu binden (Stichpunkte Freshness, Liveliness of Key).

Figur 2 zeigt eine schematische Darstellung eines Systems zum Integritätsschutz der Sensordaten. In diesem zweiten Schritt des Sicherheitskonzepts werden dabei nach der Authentifizierung - das heißt der Empfänger der Daten, nämlich das Steuergerät (ECU) B, weiß, dass es mit einem authentifizierten Sender, nämlich dem RDS-Sensor A, kommuniziert - die übertragenen Daten fortlaufend mit einem Integritätsschutz, vorzugsweise mit zeitvarianten Parametern wie Zufallszahlen, Sequenzzahlen (Sequenzzähler) oder Zeitstempeln, versehen.

Dies ist in Figur 2 durch Anhängen eines "Tag" an die von Sensor A zu Steuergerät B gesendeten Daten dargestellt, wobei der "Tag" die zeitvarianten Parameter repräsentiert. Diese zeitvarianten Parameter werden nach der Verarbeitung der Druckdaten kryptographisch geprüft und eine Manipulation der RDS-Daten wird kryptographisch sicher erkannt, das heißt es treten keine zusätzlichen Latenzzeiten in der Echtzeitdatenverarbeitung durch die Kryptographie auf und Manipulationen können somit detektiert werden.

Als effizientes Verfahren zur Erreichung des kryptographischen Integritätsschutzes werden sogenannte Message Authentication Codes MAC vorgeschlagen. Bei den so genannten CBC-MAC-Verfahren werden zwei weitere kryptographische Schlüssel benutzt, in einem weiteren modifizierten Vorschlag, dem so genannten OMAC, kommt man sogar mit nur einem zusätzlichen Integritätsschlüssel aus. Als Realisierungsoption für den RDS-Sensor mit dem digitalem PS15-Interface werden konkret vorgeschlagen: EMAC sowie CMAC, bekannt auch als OMAC. Beide Verfahren benutzen eine symmetrische Blockchiffre, vorgeschlagen wird entweder der AES-128, siehe "FIPS 197, Advanced Encryption Standard (AES), Federal Information Processing Standards Publication 197, November 2001, http://csrc.nist.gov/", Schlüssellänge k = 128 bit, Blockbreite n = 128 bit, oder alternativ PRESENT, siehe "A. Bogdanov, L.R. Knudsen, G. Leander, C. Paar, A. Poschmann, M.J.B. Robshaw, Y. Seurin, and C. Vikkelsoe, PRESENT: An ultra-lightweight block cipher, in P. Pallier and I. Verbauwhede, editors, Proceedings of CHES 2007, volume 4727 of Lecture Notes in Computer Science, Seiten 450-467, Springer-Verlag, 2007", Schlüssellänge k = 128, Blockbreite n = 64. PRESENT ist noch eine relativ neue Blockchiffre, sie ist bei weitem nicht so ausgereift wie AES, inzwischen gibt es auch erste Berichte über theoretische Kryptoanalyse-Angriffe.

In einem dritten Schritt des Sicherheitskonzepts werden zur Verhinderung von so genannten Replay-Attacken zusätzlich zu den Nutzdaten, das heißt Druckwerten, Zufallszahlen in die per Integritätsschutz abzusichernden Daten eingefügt. Diese Zufallszahlen werden im Klartext an die ECU übertragen und mittels MAC mit verifiziert.

Die Authentifizierung sollte zeitnah nach einem Motorstart erfolgen, das heißt in den ersten Minuten. Es ist jedoch nicht notwendig, sie direkt in der Startup-Phase durchzuführen. Der Integritätsschutz erfolgt erst nach der Authentifizierung, vorher ergibt dieser Integritätsschutz kryptographisch keinen Sinn. Während die Authentifizierung relativ selten, mindestens nach jedem Motorstart und nach Verlust mehrerer Pakete bzw. der Synchronität, stattfindet, werden die Druckdaten fortlaufend mit einem Integritätstag versehen, das heißt beispielsweise alle t = 16 Blöcke. Die während der Authentifizierung von ECU zu Sensor übertragene Zufallszahl kann zur Verbindung der Verfahrensschritte z.B. als Bestandteil beim Integritätsschutz als Sequence Counter benutzt und mit jedem (t = 16) x (n = 128) bit Block inkrementiert werden.

Falls der Integritätsschutz standardmässig bei jedem Druckpaket verwendet wird, sollten vor der Authentifizierung entweder die MAC-Daten ignoriert werden, was ungünstig ist, oder mit den auf dem RDS-Sensor vorhandenen Zufallszahlen benutzt werden. Nach der erfolgten Authentifizierung wird der ausgehandelte Sequence Counter verwendet.

Die kryptographischen Sicherheitsziele Authentizität des Senders und der Daten, Integrität der Daten sowie Freshness der kryptographischen Schlüssel und Daten und Verhinderung von Replay-Attacken werden mittels folgender Mechanismen erreicht:

Authentifizierung mittels Challenge-Response-Verfahren (Verschlüsselung einer Challenge nebst Identität); Integritätsschutz mittels Message Authentication Codes basierend auf dem CBC-Modus nebst entsprechendem Padding und MAC-Strengthening, das heißt EMAC und CMAC; Verhinderung von Replay-Attacken durch Einfügen von Zufallszahlen nebst den reinen Nutzdaten; Sichere kryptographische Bindung beider Protokollteile durch Verwendung eines Teils der Challenge als Sequence Counter für den Integritätsschutz; Für alle Mechanismen wird lediglich ein einziger Grundbaustein, eine symmetrische Blockchiffre, benötigt - als Realisierungsoption wird konkret AES-128 oder alternativ PRESENT vorgeschlagen; Weiterhin wird wegen der Verbindung der beiden Protokollteile lediglich auf dem Steuergerät ein Zufallszahlengenerator benötigt.

Seien A der RDS-Sensor und B das Steuergerät ECU. Ziel ist die Authentifizierung von A gegenüber B, das heißt A weist B nach, dass er über ein gemeinsames Geheimnis, einen kryptographischen Schlüssel, zum Zeitpunkt der Authentifizierung verfügt. Beide Teilnehmer an dem Protokoll verfügen über drei gemeinsame Schlüssel:

$K_{AB,Auth}$ - gemeinsamer Authentifizierungsschlüssel

$K_{AB,MAC1}$ - gemeinsamer Message Authentication Code Schlüssel 1
$K_{AB,MAC2}$ - gemeinsamer Message Authentication Code Schlüssel 2

Im Fall des CMAC-Algorithmus genügt ein gemeinsamer Message Authentication Code Schlüssel 1, $K_{AB,MAC1}$. Sei $Enc_K$ ein Verschlüsselungsalgorithmus mit Schlüssel K der Länge k und der Blockbreite n, etwa $Enc_K$ = AES, k = length(K) _ = 128, n = 128. Alternativ käme beispielsweise $Enc_K$ = PRESENT, k = length(K) = 128, n = 64 in Betracht. Weiterhin seien $ID_A$ und $ID_B$ systemweit eindeutige Identitäten der Teilnehmer, etwa 32 bit lange Seriennummern bzw. Typteilenummern. Die Länge der Seriennummern ist kryptographisch nicht bedeutsam. Wichtig ist, dass alle Teilnehmer im Gesamtsystem, d.h. nicht nur ein Motor / Fahrzeug, eindeutig identifiziert werden können. Dies spielt beim Key Management, wie später beschrieben, eine zentrale Rolle.

Seien weiterhin in diesem Beispiel $R_A$ bzw. $R_B$ von A bzw. B generierte Zufallszahlen, deren zweckmäßige Länge später spezifiziert wird.

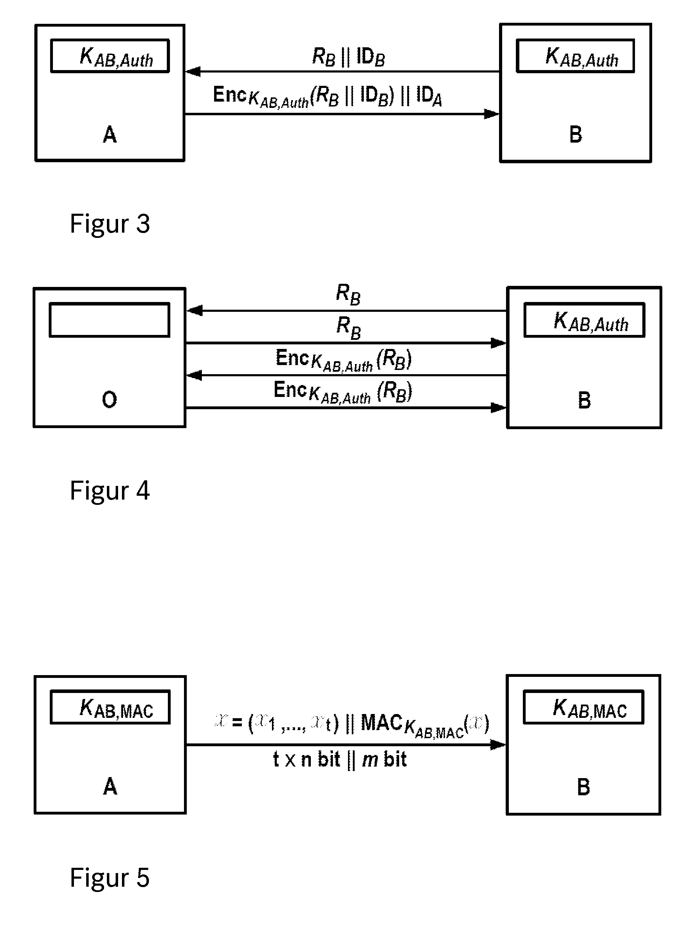

Im Folgenden wird eine beispielhafte Authentifizierung des Sensors A gegenüber dem Steuergerät B beschrieben gemäß DE-102009002396. Die Schritte 1-3 sind dabei schematisch in Figur 3 dargestellt.

1. B generiert eine 64 bit Zufallszahl $R_B$

2. B sendet diese Zufallszahl $R_B$ zusammen mit seiner Identität $ID_B$ an A:

$$B \rightarrow A: R_B \| ID_B \qquad (64\ bit\|32\ bit)$$

3. A verschlüsselt die Nachricht $R_B \| ID_B$, das heißt $Enc_{K\ AB,Auth}(R_B \| ID_B)$ und schickt dies zusammen mit $ID_A$ an B zurück:

$$A \rightarrow B: Enc_{K\ AB,Auth}(R_B \| ID_B)\| ID_A \qquad (128\ bit \| 32\ bit)$$

4. B kann sofort nach Abschluss des Protokollschrittes in 2. damit beginnen, seinerseits den Response y = $Enc_{K\ AB,Auth}(R_B \| ID_B)$ zu berechnen. Nach Erhalt der Antwort y' in 3. vergleicht er y mit der übermittelten Antwort y':

$$gilt:\ y = y' = Enc_{K\ AB,Auth}(R_B \| ID_B)?$$

Er vergleicht weiterhin die Identität von A mit der gewünschten, dh

$$gilt:\ ID_A = ID'_A?$$

Nur im Fall, dass beide Vergleiche erfolgreich sind, hat sich A gegenüber B erfolgreich authentifiziert.

Im Folgenden wird eine zweckmäßige Modifikation der Schritte 3. und 4. beschrieben. Um Kommunikationsbandbreite einzusparen, werden im Schritt 3 nur die höchstwertigen 64 bit der Verschlüsselung übertragen und demzufolge auch in 4. verglichen. Dies ist nicht gleichbedeutend mit der Anwendung eines Verschlüsselungsverfahrens mit 64 bit Blockbreite.

$$3'.\qquad A \rightarrow B: msb_{127,...,64}[Enc_{K\ AB,Auth}(R_B \| ID_B)]\ \|\ ID_A \qquad (64\ bit \| 32\ bit)$$

Im Folgenden wird das Gesamtverfahrens zur Authentifizierung 1 dargestellt.

1. B generiert eine 64 bit Zufallszahl $R_B$

2. B sendet diese Zufallszahl $R_B$ zusammen mit seiner Identität $ID_B$ an A:

$$B \rightarrow A: R_B \| ID_B \qquad (64\ bit \| 32\ bit)$$

3. A verschlüsselt die Nachricht $R_B \| ID_B$, das heißt $Enc_{K\,AB,Auth}(R_B \| ID_B)$ und schickt die 64 most significant bits (höchstwertige Bits) zusammen mit $ID_A$ an B zurück

$$A \rightarrow B: msb_{127,\ldots,64}[Enc_{K\,AB,Auth}(R_B \| ID_B)] \| ID_A \qquad (64\,bit \| 32\,bit)$$

4. B kann sofort nach Abschluss des Protokollschrittes in 2. damit beginnen, seinerseits den Response $y = msb_{127,\ldots,64}[Enc_{K\,AB,Auth}(R_B \| ID_B)]$ zu berechnen. Nach Erhalt der Antwort y' in 3. vergleicht er y mit der übermittelten Antwort y':

$$gilt: y = y' = msb_{127,\ldots,64}[Enc_{K\,AB,Auth}(R_B \| ID_B)]?$$

Er vergleicht weiterhin die Identität von A mit der gewünschten, dh

$$gilt: ID_A = ID'_A?$$

Nur im Fall, dass beide Vergleiche erfolgreich sind, hat sich A gegenüber B erfolgreich authentifiziert.
Hierzu gilt es folgendes zu bemerken.

(i) Bei dem hier vorgeschlagenen Schritt des Sicherheitskonzepts handelt es sich im Wesentlichen um das ISO/IEC 9798-2 two-pass unilateral authentication protocol. Siehe hierzu "ISO/IEC 9798-2, Information technology - Security techniques - Entity Authentication - Part 2: Mechanisms using Symmetrie encipherment. algorithms ISO/IEC, 1994". Dies gilt bis auf die Modifikation der Übertragung lediglich der 64 most sigificant bits von Enc.

(ii) Zur Verhinderung von Replay-Attacken, das heißt Aufzeichnung des gesamten Verkehrs und Wiedereinspielen in späteren Protokollabläufen, wird die Zufallszahl $R_B$ im Protokoll verwendet. Kryptographisch muss es sich um eine "nonce = number used only once" handeln. Um Replay-Attacken bei der Authentifizierung zu verhindern, wird in dem betrachteten Anwendungsszenario eine Länge von 64 bit als ausreichend angesehen. Kürzere zeitvariante Parameter führten in der Vergangenheit, beispielsweise WEP-Encryption bei WLAN 802.11b, KeeLoq, bereits zu Angriffen und/oder ausnutzbaren Schwächen des Verfahrens. Weitere Ausführungen zur Notwendigkeit der Authentifizierung und alternative Möglichkeiten finden sich im Folgenden. Für die Erzeugung der Zufallszahlen im Steuergerät B wird ein Zufallszahlengenerator RNG benötigt. Dieser sollte die Eigenschaft K3 hoch bei deterministischen RNGs haben. Siehe hierzu "Bundesamt für Sicherheit in der Informationstechnik BSI, AIS 20: Funktionalitätsklassen und Evaluationsmethodologie für deterministische Zufallszahlengeneratoren, Anwendungshinweise und Interpretationen zum Schema (AIS) Version 1, 2.12.1999, BSI, 2001, nachzulesen unter http://www.bsi.bund.de/zertifiz/zert/interpr/ais20.pdf".
Mindestens sollte er die Eigenschaft P1 hoch bei physikalischen RNGs, besser P2 hoch, haben. Siehe hierzu "Bundesamt für Sicherheit in der Informationstechnik BSI, AIS 31: Funktionalitätsklassen und Evaluationsmethodologie für physikalische Zufallszahlengeneratoren, Anwendungshinweise und Interpretationen zum Schema (AIS) Version 1, 25.9.2001, BSI, 2001, nachzulesen unter "http://www.bsi.bund.de/zertifiz/zert/interpr/ais3i.pdf". Siehe hierzu auch "W. Killmann and W. Schindler, Ein Vorschlag zu: Funktionalitätsklassen und Evaluationsmethodologie für physikalische Zufallszahlengeneratoren, Technisches Papier zu AIS 31, Version 3.1, 25.9.2001, BSI, 2001, nachzulesen unter http://www.bsi.bund.de/zertifiz/zerl/interpr/trngkr31.pdf'.

(iii) Die beispielhafte Wahl von $|R_B| = 64$ führt zu einer Angriffskomplexität von $2^{33} = 2^{64/2+1}$ Kommunikationssessions beim gleichzeitigen Abspeichern von $2^{64/2} \times 2^{32}$ Paaren $(R_B \| msb_{127\ldots0} EncK(R_B))$ (64 bit $\|$ 64 bit) für einen simplen ZweiSchritt Wörterbuch-Angriff. Siehe hierzu beispielsweise "Andrey Bogdanov and Christof Paar, On the Security and Efficiency of Real-World Lightweight Authentication Protocols, In Secure Component and System Identification, März 2007, Workshop Record of SECSI, Berlin, März 17-18, 2008". Man beachte, dass in dem Einsatzszenario RDS-Sensor die Kommunikation zum Sender hin (Challenge) um Größenordnungen langsamer ist als die Kommunikation vom Sender zum Steuergerät (Response). Das simple Raten der 64 bit Response $msb_{127\ldots0} EncK(R_B)$ hat eine Angriffskomplexität von $2^{64-1} = 2^{63}$. Die Identitäten $ID_A$, $ID_B$ werden in dem System benötigt, da später auch ein Einsatz mehrer Sensoren geplant ist. Sie sind z.B. als 32 bit Werte angenommen, können jedoch ohne größere Probleme auch 64 bit lang sein. Sollten die Datenpakete $R_B \| ID_B$, etwa durch Wahl einer 80 bit ID, länger als 128 bit werden, so ist zu beachten, dass dann für $Enc_K(R_B \| ID_B)$ ein sicherer Mode of Operation (Ausführungs-Modus) verwendet wird, etwa CBC-Encryption with random IV and padding, nicht mehr der simple ECB-Mode, das heißt die Lösung ist prinzipiell machbar, aber teurer.

Ein aus Sicht der Kryptographie besserer Wert für die Länge der Challenge wäre etwa $| R_B | = 128$. Dann hätten sowohl eine Scan-Attacke (Raten der Response) als auch Wörterbuch-Attacke eine Angriffskomplexität von ca. $2^{64}$. Allerdings hätten dann die Nachrichtenblöcke die Grenze von 128 bit überschritten, kürzere Identifier ID sind aber nicht möglich.

(iv) Das vorgeschlagene Verfahren verhindert wirksam so genannte "Reflection Attacks", manchmal auch "Impersonation" oder "Parallel Sessions Attack" genannt. Das vereinfachte Protokoll:

> 2. $\quad$ B -> A: $R_B$ $\qquad$ (64 bit)
> 3. $\quad$ A -> B: $EnC_{K\,AB,Auth}$ ($R_B$) $\qquad$ (128 bit)

dh ohne die Identitäten ID, kann angegriffen werden, indem der Angreifer O sofort die Zufallszahl $R_B$ reflektiert und an B zurücksendet. B beantwortet diese parallele zweite Session mit dem berechneten Wert $Enc_{K\,AB,Auth}$ ($R_B$), welchen O seinerseits als Antwort verwendet. Figur 4 zeigt eine schematische Darstellung einer solchen Reflektionsattacke bei einfacher Authentifizierung.

Eine einfache Gegenmaßnahme, ohne zusätzliche implizite Annahme über das Verhalten von A und B, ist die Einbeziehung der Identität in den zu verschlüsselnden Text, das heißt $Enc_{K\,AB,Auth}$ ($R_B \parallel ID_B$).

(v) An Stelle der Verschlüsselungsfunktion Enc kann in dem Protokoll auch eine Keyed Hashfunktion HMAC, eine allgemeine Hashfunktion, wie SHA-256, oder ein Message Authentication Code (MAC), wie CBC-MAC, verwendet werden. Diese Realisierungsoptionen würden aber alle zu höherem Aufwand führen.

(vi) Auf die Authentifizierung der Challenge, das heißt B -> A : $R_B$,MAC($R_B$) wird in diesem Ausführungsbeispiel aus Aufwandsgründen und unter Beachtung der Bemerkungen in (iii) verzichtet.

(vii) Das hier beispielhaft vorgeschlagene Protokoll ist ein sogenanntes "two-pass unilateral authentication protocol with nonces" (einseitiges Zwei-Pass-Authentifizierungsprotokoll mit nur einmal verwendeten Zahlen). In der Kryptographie sucht man immer nach einem Protokoll mit der geringsten Anzahl von Protokollpässen und trotzdem hohen Sicherheitseigenschaften. Allgemein kann gesagt werden, dass man meist mit einem Protokollpass weniger auskommt, wenn man statt der Nonces, Zufallszahlen, entweder einen Time Stamp (Zeitstempel) oder einen synchronen Counter, Sequence Number (Sequenzzähler/ Sequenzzahl), verwendet. Der Zeitstempel oder der Zähler dürfen insbesondere nicht von A, dem Prover (Überprüfer), gesetzt bzw. zurückgesetzt werden dürfen. In diesem Fall kämen sämtliche Protokollaktionen von A und könnten somit aufgezeichnet sein.

Der entscheidende Punkt ist also: Falls nur eine unidirektionale Kommunikation von A nach B stattfinden kann und weder Zeitstempel noch Sequenzzähler, welche im System synchron und nicht manipulierbar vorhanden sein müssen, verwendet werden können, dann werden alle Protokollaktionen von A initiiert, B ist passiv, und der Prover / Claimant (Prüfer / Anforderer) A kann theoretisch alle Daten vorher aufzeichnen und einspielen. Es ist also prinzipiell nicht möglich, auf den Rückkanal zu verzichten und trotzdem die geforderte Sicherheit, beispielsweise durch implizite Authentifizierung, zu erreichen.

Hierzu wird verwiesen auf "Walter Fumy and Hans-Peter Riess, Kryptographie, Entwurf; Einsatz und Analyse symmetrischer Kryptoverfahren, R. Oldenbourg Verlag, München, Wien, second edition, 1994". Es wird dort gelehrt, dass der Einsatz von Zeitstempeln die Verfügbarkeit einer hinreichend exakten und zuverlässigen Systemzeit erfordert. Die verifizierende Instanz kann in diesem Fall die Gültigkeit einer Nachricht anhand des zugehörigen Zeitstempels überprüfen. Eine Nachricht wird akzeptiert, falls die Abweichung zwischen dem Zeitpunkt des Nachrichteneingangs und dem Zeitstempel einen Schwellwert nicht übersteigt. Soll ein Wiedereinspielen von Transaktionen auch innerhalb des tolerierten Zeitintervalls verhindert werden, so muss über die akzeptierten Nachrichten entsprechend lange Buch geführt werden. Dies ist allerdings im Sensorkontext unmöglich. Eine gewisse Schwierigkeit beim praktischen Einsatz von Zeitstempeln bildet die Synchronisation der Uhren bei den beteiligten Instanzen; problematisch kann aber auch deren häufig mangelhafte Manipulationssicherheit sein. Die Grundidee von Sequenznummern besteht darin, dass bei einem Authentifizierungsmechanismus zu jeder Sequenznummer nur eine Nachricht oder eine Nachricht innerhalb eines bestimmten logischen Zeitraums akzeptiert wird. Die Verwendung von Sequenznummern erfordert einen gewissen Verwaltungsaufwand, der für jede entsprechende Kommunikationsbeziehung anfällt. Eine Mindestanforderung ist das Speichern der jeweils aktuellen Sequenznummer für jede Kommunikationsrichtung. Auch müssen beispielsweise für den Fall eines Systemausfalls, Synchronisationsmechanismen vorgesehen werden.

An Hand dieses Auszugs aus einem Kryptographielehrbuch sieht man, dass man auf irgendeine Form der bidirektionalen oder synchronen Kommunikation bei einer Authentifizierung nicht verzichten kann. Dies verneint für das Ausführungsbeispiel einer Sensor-Steuergerät-Kommunikation über einen PSI5-Bus eindeutig die Frage, ob man auf eine synchrone, bidirektionale PSI5-Kommunikation zwischen ECU und Sensor verzichten kann.

(viii) Der Vollständigkeit halber sei noch das entsprechende "one-pass unilateral authentication protocol with time stamps / sequence counters" nach ISO/IEC 9798-2 angegeben. Siehe hierzu "ISO/IEC 9798-2, Information technology - Security techniques - Entity Authentication - Part 2: Mechanisms using Symmetrie encipherment algorithms ISO/IEC, 1994".

$$A \to B : Enc_{K\,AB,Auth}\,(TS_A \,\|\, ID_B) \,\|\, ID_A$$

mit $TS_A$ - Time Stamp, generiert von A. Die im Klartext übertragene $ID_A$ ist von keiner unmittelbaren kryptographischen Bedeutung, sie sind im ISO-Standard nicht vorhanden.

Im Folgenden wird auf Designprinzipien für kryptographische Protokolle eingegangen. Zum Design eines kryptographischen Protokolls gibt es einige Prinzipien, welche man beachten sollte. Es wird hierbei auf "Colin Boyd and Anish Mathuria, Protocols for Authentication and Key Establishment, Springer, 2003, Seite 31" Bezug genommen.

Die in dieser Literatur angegebenen Protokolle können als Protokolle 3.4 und 3.5 dort gefunden werden, siehe Seiten 77 und 78, das Zeichen $\{\}_K$ steht für authenticated encryption mit Schlüssel K.

$$A \to B : \{T_A, B\}_{K\,AB}$$

Protocol 3.4: ISO/IEC 9798-2 one-pass unilateral authentication protocol

1. $B \to A : N_B$
2. $A \to B : \{NA, B\}K_{AB}$

Protocol 3.4: ISO/IEC 9798-2 two-pass unilateral authentication protocol

Der in der Literatur auf Seite 80 aufzufindenden Tabelle 3.2 kann man entnehmen, dass beide Protokolle 3.4 und 3.5 die gewünschten Eigenschaften Liveness, Freshness of key, und Entity Authentication von A erfüllen, und dass keine bekannten Angriffe existieren, obwohl kein formaler Sicherheitsbeweis existiert. Die Sicherheit beider Protokolle wurde in der Vergangenheit breit untersucht. Formale Sicherheitsbeweise von Protokollen sind erst in jüngster Zeit eine harte Anforderung an Standards. Die entstehenden Protokolle sind oft aus technischen Gründen etwas umfangreicher als die klassischen Authentifizierungsprotokolle. Das im Folgenden beispielhaft ausgewählte Protokoll, angelehnt an Protokoll 3.5, ist das günstigste aller dort dargestellten Protokolle, für welche bisher noch kein Angriff existiert.

Im Folgenden wird näher auf den Integritätsschutz der Sensordaten, den zweiten Schritt des Sicherheitsgesamtkonzeptes, eingegangen. Neben der Verhinderung des Austauschens von Sensoren kommt der Verhinderung bzw. genauer der Entdeckung und dem Nachweis von Modifikationen der Sensordaten eine sehr große Bedeutung zu. Kryptographische Techniken zum Schutz der Daten fokussieren auf den Ursprung der Daten, das heißt data origin authentication, integrity of sender, und auf die Integrität der Daten, integrity of data, das heißt den Fakt, dass die Daten nicht modifiziert wurden. Andere wichtige Aspekte sind die Timeliness, die Abfolge von Daten und ggf der beabsichtigte Empfänger. Diese Eigenschaften sind stark applikationsabhängig. Es stellt sich beispielsweise die Frage, ob der Replay von unmodifizierten Daten beispielsweise bei Paketverlusten ein kryptographischer Angriff ist. Daher werden in die kryptographischen Grundmechanismen selbst keine zeitlich abhängigen States (Zustände) eingebaut.

Im Folgenden werden die oben angegebenen Bezeichnungen verwendet. Seien also $x = (x_1, \ldots, x_t)$ die t Message Text Blöcke der Blockbreite n, ggf nach dem durchgeführten Padding. Zur Erreichung des Ziels der Authentizität bzw. Integrität der Daten können im Wesentlichen drei kryptographische Zugänge unterschieden werden: Authentifizierungscodes, digitale Signaturen und Message Authentication Codes.

Authentifizierungscodes sind kombinatorische Objekte, deren Erfolgswahrscheinlichkeit für einen Angriff explizit ausgerechnet werden kann und unabhängig von der Rechenleistung des Angreifers ist. Sie sind heutzutage relativ wenig verbreitet, oftmals wird für jede Transaktion ein neuer Schlüssel benötigt.

Digitale Signaturen sind asymmetrische Verfahren, welche um den Faktor 100 bis 1000 langsamer als symmetrische Verfahren sind. Im Fall asymmetrischer Verfahren verfügt jeder Sensor / Teilnehmer A über ein eigenes Schlüsselpaar $pk_A$, $sk_A$ (public key, secret/ private key). Bei der Signatur hasht der Teilnehmer A die Nachricht x und wendet das Signaturgenerierungsverfahren GenSig mit seinem privaten Schlüssel $sk_A$ an und sendet die resultierende Signatur s an B, dh

$$A \rightarrow B : x, s = GenSig_{skA} (h(x))$$

B : gilt $VerSig_{pkA}$ (x', s)?          Accept or Reject.

B erhält die Nachricht x' und die Signatur s und überprüft mittels des Signaturverifikationsverfahrens VerSig unter Nutzung des authentischen public keys (öffentlichen Schlüssels) von A die Signatur. Heutzutage verwendet man z.B. im Automotive-Bereich meist RSA PKCS#1 v1.5 Signaturen:

    1. RSA 1024 bit: GenSig: 1024 bit$^{1024bit}$, VerSig: 1024 bit$^{16bit}$; Signatur, Modul, private Key je 128 byte, public Key $\approx$ 16 bit

    2. RSA 2048 bit: GenSig: 2048 bit$^{2048bit}$, VerSig: 2048 bit$^{16bit}$; Signatur, Modul, private Key je 256 byte, public Key $\approx$ 16 bit
    Wesentlich bessere Eigenschaften haben ECC(Elliptic Curve Cryptography)-Signaturen.

    3. ECDSA 160 bit - Sicherheit vergleichbar mit RSA 1024 bit: GenSig: eine skalare Punktmultiplikation, VerSig: zwei skalare Punktmultiplikationen; Signatur 40 byte

    4. ECDSA 256 bit - Sicherheit vergleichbar mit RSA 2048 bit: GenSig: eine skalare Punktmultiplikation, VerSig: zwei skalare Punktmultiplikationen; Signatur 80 byte

Digitale Signaturen liefern zusätzlich zum Integritätsschutz die Eigenschaft der Nichtabstreitbarkeit, Non Repudiation Property, welche bei Disputen zwischen den Kommunikationspartnern rechtlich hilfreich sein kann. Da in dem beispielhaft beschriebenen Sensorkontext beide Kommunikationspartner innerhalb des Systems Auto arbeiten (Motor bzw. Steuergerät B sowie Sensor A) und das Steuergerät B selten eine vom Sensor A erhaltene Nachricht abstreiten wird, ist Nichtabstreitbarkeit in diesem konkreten Fall nicht notwendig.

Im Folgenden werden Message Authentication Codes erläutert. Wie im Obigen betrachtet, löst eine simple Verschlüsselung eines Tags, beispielsweise linearer Tag oder Hashdigest, das Problem der Authentizität von Nachrichten nicht. Ein Message Authentication Code besteht aus einem:

    1. Schlüsselgenerierungsalgorithmus: Output: symmetrischer Schlüssel K, Bitlänge k, beispielsweise k = 56 ... 256,

    2. MAC-Generierungsalgorithmus: Input: Text x, Schlüssel K, Output: $MAC_K$ (x)-Bitstring der Länge m, beispielsweise m = 24 ... 128,

    3. MAC-Verifikationsalgorithmus: Input: Text x, MAC-Wert $MAC_K$(x), Schlüssel K, Output: Accept oder Reject.

Die Sicherheit eines MAC-Algorithmus kann informell wie folgt beschrieben werden - allgemein akzeptiertes Sicherheitsmodell: Es soll einem Angreifer praktisch unmöglich, computationally infeasible, sein, eine so genannte existential forgery, das heißt irgendeine zulässige Fälschung, zu generieren mittels einer so genannten adaptiven Chosen Text Attacke, dies umfasst insbesondere auch MAC-Verifikationsabfragen, siehe beispielsweise "Jonathan Kahtz and Yehuda Lindell, Introduction to Modern Cryptography, CRC Publishing, 2007, Seite 16". Wenn ein Message Authentication Code in diesem Sinne sicher ist, dann ist die Sicherheit insbesondere nicht abhängig von der speziellen Codierung der Daten.

Vier typische Attacken auf MAC-Algorithmen sind:

    1. Brute Force Schlüsselsuche -> hinreichend großer Schlüsselraum, beispielsweise k$\geq$ 80 für medium term security

    2. Raten des MAC-Wertes -> Erfolgswahrscheinlichkeit max ($2^{-k}$, $2^{-m}$). Für die meisten Applikationen gilt k>m und m=32...64.

    3. Generische Fälschung basierend auf internen Kollisionen. Dies ist insbesondere bei den oben angegebenen, modifizierten vorgeschlagenen "Integritätsschutzverfahren" der Fall.

    4. Attacken basierend auf kryptoanalytischen Schwächen

Zur Erklärung der beiden letzten Angriffsszenarien wird zitiert aus "Bart Preneel, MAC algorithms, In van Tilborg, siehe hierzu "Henk C. A. van Tilborg, editor, Encyclopedia of Cryptography and Security, Springer, 2005", Seite 365".

Man unterscheidet zwischen MACs, welche auf Blockchiffren basieren, und MACs, welche auf dedizierten Hashfunktionen basieren. Vor einiger Zeit haben in den internationalen Gremien zusätzlich Arbeiten begonnen, um MACs mit so genannten universellen Hashfunktionen zu standardisieren, siehe ISO/IEC 9797-3. Diese sind allerdings noch nicht weit verbreitet.

Im Folgenden werden Keyed Hashfunctions - HMAC erläutert. Unter den Keyed Hashfunctions hat die HMAC-Konstruktion, siehe "Mihir Bellare, Ran Canetti and Hugo Krawczyk, Keying hash functions for message authentication, In Neal Koblitz, editor, Proceedings of CRYPTO'96, volume 1109 of Lecture Notes in Computer Science, Seiten 1-15, Springer, 1996" am weitesten Verbreitung gefunden. Sie wird insbesondere im IETF-Umfeld, beispielsweise bei IPsec und http-digest, sehr oft eingesetzt. HMAC basiert auf dem zweimaligen, verschachtelten Hashen einer Nachricht x unter Verwendung eines geheimen Schlüssels K mit einer geeigneten Hashfunktion H.

$$HMAC_K(x) := H(K \oplus opad \| H(K \oplus ipad \| x))$$

Die zwei Strings ipad, inner-padding, und opad, outer-padding, sind vorgegebene Stringkonstanten. Im Gegensatz zu MACs basierend auf Blockchiffren gibt es bei der HMAC-Konstruktion nicht eine Vielzahl von Padding-Methoden und optionalen Prozessen.

Weit verbreitet sind etwa HMAC-SHA-1, H=SHA-1, m = 96, das heißt nur 96 most significant bits der 160 bit Output, und HMAC-SHA-256, H=SHA-256, m = 96, das heißt nur 96 most significant bits der 256 bit Output, siehe etwa IPSec. HMAC wurde im Rahmen der Sensorabsicherung betrachtet, ist allerdings deutlich teurer als die letztendlich im konkreten Ausführungsbeispiel vorgeschlagene Lösung.

Im Folgenden werden MACs basierend auf Blockchiffren erläutert. Seien $x_1$, $x_2$, .... $x_{t'}$ die Blöcke von Message Texten, beispielsweise mit der Blocklänge n = 128 für den Algorithmus Enc = AES oder der Blocklänge n = 64 für die Algorithmen Enc = DES, Triple DES, IDEA oder PRESENT, dh:

$$n = |x_1| = ... = |x_{t'-1}|$$

Mit t' sei die Anzahl der Blöcke vor dem so genannten Padding bezeichnet, dabei kann der letzte Block ggf weniger als n Bits umfassen, das heißt $0 < |x_{t'}| \leq n$. Nach dem Padding erhält man t Message Text Blöcke $x_1,...$ , $x_t$, wobei je nach Paddingverfahren gilt:

Padding Method 1: Der Plaintext wird mit keinem oder mehreren 0-Bits aufgefüllt bis ein Vielfaches der Blocklänge n erreicht ist, das heißt t = t'. Siehe hierzu "A. J. Menezes, P. C. van Oorschot, and S. A. Vanstone, Handbook of Applied Cryptography, CRC Press, 1996, Algorithm 9.29, Seite 334".

Padding Method 2: Dem Plaintext wird ein 1-Bit angehängt, danach wird mit 0-Bits aufgefüllt bis ein Vielfaches der Blocklänge n erreicht ist, das heißt t = t' oder t = t'+ 1. Siehe hierzu "A. J. Menezes, P. C. van Oorschot, and S. A. Vanstone, Handbook of Applied Cryptography, CRC Press, 1996, Algorithm 9.30, Seiten 334-335".

Padding Method 3: Kodiere die Länge der ursprünglichen Nachricht in einem Längenblock L, meist 64 bit, ggf linksbündig mit 0-Bits auffüllen. Fülle die ursprüngliche Nachricht mit keinem oder mehreren 0-Bits auf bis ein Vielfaches der Blocklänge n erreicht ist, hänge den Längenblock L an, das heißt t = t' oder t =t'+1.

Padding Method 3 wurde erst in der Version 1999, siehe "ISO/IEC 9797-1, Information technology - Security techniques - Message Authentication Codes (MACS) Part 1: Mechanisms using a block cipher, ISO/IEC, 1999" des Standards für Message Authentication Codes ergänzt und war in vorherigen Versionen, siehe "ISO/IPC 9797, Information technology - Security techniques - Data integrity mechanisms using a cryptographic check function employing block cipher algorithm, ISO/IEC, 1994" nicht enthalten. Dieses Paddingverfahren findet auch bei Hashfunktionen eine Anwendung.

Das erste Paddingverfahren hat schlechtere Sicherheitseigenschaften als die Methoden 2 und 3.

Der Einfachheit halber wird angenommen, dass in diesen message text Daten bereits zusätzliche Randomisierungsdaten, welche zur Abwehr so genannter Replay-Attacken benutzt werden, enthalten sind, mehr dazu wird im Folgenden angegeben.

Seien also $x_1,..,x_t$ die gepaddeten und ggf um Randomisierungsdaten ergänzten Druckwerte, message text.

In dem konkreten Ausführungsbeispiel RDS-Sensorabsicherung etwa ist zur Zeit konkret geplant:

$Enc_K$ - Verschlüsselungsalgorithmus AES mit Schlüssel K
k - Länge des Schlüssels K in bit, hier k = 128
n - Blockbreite des Verschlüsselungsalgorithmus, hier n = 128
t - Anzahl der Blöcke, hier t = 16

Bei den Message Authentication Codes, welche auf Blockchiffren basieren, ist die CBC-MAC Konstruktion die meist verbreitete. Sei IV ein Initialization Vector der Länge n. Beim CBC-MAC kann im Gegensatz zu CBC-Encryption der Wert $IV = 0^n$ gewählt werden.

$$H_0 := IV = 0^n \qquad \text{Initialization}$$
$$H_i := Enc_K(H_{i-1} \oplus x_i) \; i = 1, \ldots , t \qquad \text{CBC mode}$$
$$MAC_K(x) := g(H_t) \qquad \text{Output transformation}$$

Im Folgenden gilt es zu bemerken:

(i) Im Anhang A des Standards "ISO/IPC 9797, Information technology - Security techniques - Data integrity mechanisms using a cryptographic check function employing block cipher algorithm, ISO/IEC, 1994" werden außerdem zwei optionale Prozesse definiert:
Optional process 1: Beim ersten optionalen Prozess wird mit einem zweiten unabhängigem Schlüssel $K_2$ der letzte Block $H_t$ noch einmal gesondert behandelt: der letzte Block $H_t$ wird mit $K_2$ entschlüsselt und mit $K_1$ verschlüsselt. Dies entspricht $g(H_t) := Enc_{K1}(Dec_{K2}(H_t))$. Dieser Prozess nennt sich MAC-Strengthening und dient der Abwehr bestimmter chosen-text existential forgery Angriffe.
Optional process 2: Der zweite optionale Prozess beinhaltet das nochmalige Verschlüsseln des letzten Blocks mittels eines zweiten Schlüssels $K_2$, das heißt $MAC := g(H_t) = Enc_{K2}(H_t)$.

(ii) Der neue Standard, siehe "ISO/IEC 9797-1, Information technology - Security techniques - Message Authentication Codes (MACS) Part 1: Mechanisms using a block cipher, ISO/IEC, 1999" enthält keine optionalen Prozesse mehr, sondern spezifiziert stattdessen sechs unterschiedliche MAC-Algorithmen, welche jeweils mit den drei verschiedenen Padding-Methoden kombiniert werden können. Die MAC-Algorithmen 4 bis 5 sind neue Schemata. Zwei der dort vorgeschlagenen Verfahren sind auf Grund neuer kryptanalytischer Kenntnisse von 2003 nicht mehr als geeignet anzusehen. Die alten, bewährten Algorithmen sind:

1. CBC-MAC ohne optionale Prozesse: gewöhnlicher CBC-MAC, das heißt $g(H_t) = H_t$.
Bellare, Kilian und Rogaway, siehe "M. Bellare, J. Kilian, and F.:'Rogaway, The security of cipher block chaining, Journal of Computer and System Sciences, 3(61):362-399, 2000", konnten im Jahre 2000 zeigen, dass dieser CBC-MAC bei Nachrichten fester Länge sicher ist, wenn die zugrundeliegende Blockchiffre sicher ist, das heißt eine Pseudo Random Function ist. Man beachte, dass es sofort Angriffe gibt bei Nachrichten varaibler Länge, beispielsweise $MAC_K(x \parallel (x \oplus MAC_K(x))) = MAC_K(x)$. Deshalb wird dieser einfache CBC-MAC in der Praxis nicht verwendet.

2. CBC-MAC mit optionalem Prozess 1: Retail-MAC. Dieser MAC mit $g(H_t) = msb_{63\ldots32} \, Enc_{K1}(Dec_{K2}(H_t))$ wurde erstmals für DES im Retail-Bankenbereich eingesetzt, daher der Name, das heißt m = n/2 = 32, n = 64, Enc - DES, k = 56 für $K_1$ und $K_2$. Die Modifikation des CBC-MAC derart, dass nicht der komplette letzte n-bit Block $g(H_t)$ als MAC benutzt wird, sondern nur die m linksbündigen Bits davon, dient der Sicherheit gegen exhaustive key Attacken. In der Praxis ist oft m = n/2. Die Anwendung dieses CBC-MAC Verfahrens für die Integrität von Sensordaten wurde erstmals im RDS-Sensorworkshop am 29. Oktober 2008 vorgeschlagen. Wenn man DES als Verschlüsselungsalgorithmus einsetzt, so macht es keinen großen Unterschied im Implementierungsaufwand, sowohl in Software als auch in Hardware, ob man nur Verschlüsselung oder Ver- und Entschlüsselung benutzt. Beim AES ist aber der Overhead für eine Entschlüsselung gegenüber einer Verschlüsselung wesentlich größer. Daher wird in den darauffolgenden Sitzungen das nachfolgende Verfahren vorgeschlagen, welches nur mit Verschlüsselung auskommt.

3. CBC-MAC mit optionalem Prozess 2: EMAC: Dieses Schema benutzt als Output-Transformation: $g(H_t) = Enc_{K2}(H_t) = Enc_{K2}(Enc_{K1}(H_{t-1} \oplus x_t))$ mit einem zweiten Schlüssel $K_2$. Die EMAC-Konstruktion wurde zuerst vom RIPE-Konsortium im Jahre 1995 vorgeschlagen. Petrank/Rackoff, siehe "E. Petrank and C. Rackoff, CBC MAC for real-time data sources, Journal of Cryptology, 3(13):315-338, 2000" gelang es mit diesem Schema erstmals, die Sicherheit von CBC-MACS bei Inputs variabler Länge zu beweisen. Dieses Schema wird als Realisierungsoption für die Sensorabsicherung vorgeschlagen, konkret Enc - AES, k = 128 für die Schlüssel $K_1$ und $K_2$, n = 128, m = m/2 = 54.

(iii) Eine weitere Optimierung von Black und Rogaway reduziert den Overhead durch das Padding. Der XCBC- oder Three-Key MAC, siehe "J. Black and P. Rogawa, CBC MACs for arbitrary-length messages, In Mihir Bellare, editor, Advances in Cryptology - CRYPTO 2000, number 1880 in Lecture Notes in Computer Science, Seiten 197-215, Springer-Verlag, 2000" benutzt einen k bit Schlüssel $K_1$ für die Blockchiffre und zwei n bit Schlüssel $K_2$ und $K_3$ für das so genannte Key Whitening, siehe "T. Schütze, Algorithmen für eine Crypto-Library für Embedded Systems, Technical report, Robert Bosch GmbH, CR/AEA, August 2007, Internal document, Version 1.0, 2007-08-07, 46 pages" für die Grundidee des XOR-Encrypt-XOR Ansatzes. Der XCBC-MAC modifiziert die letzte Verschlüsselung und das Padding so, dass die Anzahl der Blöcke vor und nach Padding gleich ist, das heißt t = t':

$$\text{Falls } |x_{t'}| = n, \text{ dann } x_t = x_{t'} \oplus K_2.$$

Andernfalls hänge ein '1'-bit und j = n - $|x_{t'}|$-1 '0'-bits an und $x_t = (x_{t'} \| 10^j) \oplus K_3$.

(iv) Natürlich ist noch ein weiterer Schlüssel $K_3$ weniger vorteilhaft. Der OMAC-Algorithmus von Iwata und Kurosawa, siehe "T. Iwata and K. Kurosawa. OMAC: One key CBC MAC, In T. Johannson, editor, Fast Software Encryption, number 2887 in Lecture Notes in Computer Science, Seiten 129-153, Springer-Verlag, 2003" reduziert den Aufwand auf einen Schlüssel, indem speziell $K_2$ = '2' x $\text{Enc}_{K1}(0^n)$ und K3 = '4' x $\text{Enc}_{K1}(0^n)$ gewählt wird.
Es ist zu erwähnen, dass '2' und '4' zwei Elemente im Galoisfeld $GF(2^n)$ sind, und dass x die Multiplikation in diesem Körper bezeichnet.
Es wird erwartet, dass NIST diesen Algorithmus unter dem Namen CMAC standardisieren wird. Siehe hierzu "Morris Dworkin, Cipher Modes of Operation: The CMAC Mode for Authentication, NIST Special Publication 800-38b, National Institute of Standards and Technology NIST, May 2005, siehe http: //csrc.nist.gov/publications/nistpubs/800-38b/sp800-38b.pdf, Seiten 2 und 3". Es wird für das Ausführungsbeispiel vorgeschlagen, diesen Algorithmus OMAC bzw. CMAC als Message Authentication Code für die Sensorabsicherung parallel zum EMAC zu untersuchen.

(v) Bei der CBC-Encryption werden selbstverständlich alle verschlüsselten Blöcke ausgegeben, beim CBC-MAC nur der letzte Block. Dies hat nicht nur technische Gründe. Ein CBC-MAC-Verfahren, welches alle $H_i$ ausgibt, ist unsicher, siehe "Jonathan Kahtz and Yehuda Lindell, Introduction to Modern Cryptography, CRC Publishing, 2007, Seite 126".

Im Folgenden werden die vorgeschlagenen Integritätsschutzverfahren dargestellt und zusammengefasst. Wie bisher bezeichnen x = $(x_1,... , x_{t'})$ die Blöcke von Message Texten, Druckwerten, mit der Blocklänge n, Enc = {AES, PRESENT } die symmetrische Blockchiffre, das heißt k = 128 und n = 128 oder n = 64. Nach dem Padding, zur Auswahl stehen Padding Methode 1 oder 2, erhält man t Message Text Blöcke x = $(x_1, ..., x_t)$. Um konkrete Zahlen präsentieren zu können, wird für die folgende Darstellung die zur Zeit geplante Realisierung beim RDS-Sensor ausgewählt:

t = 16 Blöcke
Enc AES, k = 128, n = 128
Padding Methode 1

Im Folgenden wird das EMAC erläutert:

$H_0 := IV = 0^{128}$              Initialization
$H_i := \text{Enc}_{K \text{ AB,MAC1}} (H_{i-1} \oplus x_i)$ i = 1, ... , t     CBC mode
$\text{MAC}_K(x) := \text{msb}_{127...64}[\text{Enc}_{K \text{ AB,MAC2}}(Ht)]$   Output transformation

mit den zwei 128 bit MAC-Schlüsseln $K_{AB,MAC1}$ und $K_{AB,MAC2}$, m =n/2 = 64, das heißt truncation of MAC output, und der Output-Transformation $\text{Enc}_{K \text{ AB,MAC2}}(H_t)$.
Bei der zur Zeit betrachteten Variante ist die Anzahl der Bits 2048 durch die Blocklänge 128 teilbar, das heißt Padding-Methode 1 ist äquivalent zu keinem Padding. Für allgemeine Anwendungen dieses Sicherheitskonzeptes wird Padding-Methode 2 dringend empfohlen, ansonsten sollte das Verfahren wirklich nur für Input fester Länge verwendet werden. Der Sicherheitsbeweis für das Verfahren EMAC findet sich in "E. Petrank and C. Rackoff, CBC MAC for realtime data sources, Journal of Cryptology, 3(13):315-338, 2000", das heißt existentially unforgeable under adaptive chosen-message attacks for variable input length. Das Verfahren ist in "ISO/IEC 9797-2, Information technology - Security techniques - Message Authentication Codes MACs - Part 2: Mechanisms using a dedicated hash function, ISO/IEC; 2002" standardisiert. Der Aufwand besteht im Wesentlichen aus $t + 1$ Aufrufen der Blockchiffre.

Im Folgenden wird das CMAC / OMAC betrachtet. Seien K bzw. $K_{AB,MAC1}$ der 128 bit MAC Schlüssel, $K_1$, $K_2$ bezeichnen zwei 128 bit abgeleitete Schlüssel. Seien weiterhin wie üblich $x_1,...,x_{t-1}$, $x'_t$ die Blöcke von Message Texten der Blocklänge n (n = 128 für AES). Für das CMAC-Verfahren gilt t' = t, das heißt die Anzahl der Blöcke vor und nach Nachbearbeitung ("Padding") des letzten Blockes ist gleich, es gilt sogar $|x_t| = |x'_t|$, das heißt die Anzahl der Bits im letzten Block ist gleich, allerdings gilt nicht $x'_t = x_t$. Der letzte Block wird vielmehr durch die XCBC-Konstruktion modifiziert.

Im Folgenden wird ein Algorithmus zur Subkey-Generierung beim CMAC erläutert.

Input: Key K, Output: Sub Keys $K_1$, $K_2$
S1: $L := Enc_K(0^{128})$;
S2: if (rnsb(L) = 0) then $K_1 := (L \ll 1)$ else $K1 := (L \ll 1) \oplus R_b$;
S3: if (msb($K_1$) = 0) then $K2 := (K1 \ll 1)$ else $K_2 := (K_1 \ll 1) \oplus Rb$;

Die Konstante $R_b := 0x0 ... 087$ für eine Blockchiffre der Blockbreite 128, das heißt beispielsweise AES, und $R_B := 0x0 ... 01B$ für eine 64 bit Blocklängenchiffre, beispielsweise Triple DES. Falls $|x'_t| = n$, das heißt der letzte Block $x'_t$ ist komplett, dann setze

$$xt := K_1 \oplus x'_t, \text{ sonst } xt := K_2 \oplus (x'_t \| 10^j)$$

mit $j = n - |x'_t| - 1$. Mit diesen, nur im letzten Block gegenüber den Originaldaten veränderten, Message Blöcken $x_1, ...$ , $x_t$ wird nun der Standard-CBC-MAC-Algorithmus durchgeführt, bei Bedarf kann der Output bis auf 64 bit abgeschnitten werden:

| | |
|---|---|
| $H_0 := IV = 0^{128}$ | Initialization |
| $H_i := EnC_{K\,AB,MAC1}(H_{i-1} \oplus x_i)\, i = 1, ...,t$ | CBC mode |
| $MAC_K(x) := msb_{127...64}(H_t)$ | Output transformation |

Beim CMAC-Verfahren muss im Gegensatz zu EMAC selbst bei einer Anzahl der Bits, welche nicht durch die Blocklänge teilbar ist, kein Block zusätzlich angehängt werden. Man benötigt nur einen 128 bit MAC-Key $K_{AB,MAC1}$. Zur Darstellung und Sicherheit des Verfahrens wird auf "T. Iwata and K. Kurosawa, OMAC: One key CBC MAC, In T. Johannson, editor, Fast Software Encryption, number 2887 in Lecture Notes in Computer Science, Seiten 129-153, Springer-Verlag, 2003" und "Morris Dworkin, Cipher Modes of Operation: The CMAC Mode for Authentication, NIST Special Publication 800-38b, National Institute of Standards and Technology (NIST), May 2005, siehe auch http://csrc.nist.gov/publications/nistpubs/800-38b/sp800-38b.pdf" verwiesen. Das Verfahren wird zur Zeit beim NIST standardisiert. Der Aufwand besteht in t Aufrufen der Blockchiffre, einer einmaligen Vorberechnung von $Enc_K('0')$ sowie den $GF(2^{128})$ bzw. Shift-Operationen.

Ob das Verfahren CMAC in der Praxis wirklich schneller und vor allem platz-bzw. speicherplatzsparender als EMAC realisiert werden kann, hängt ganz von der Implementierung der Blockchiffre und des kombinatorischen Overheads bei CMAC ab. Details können erst nach verschiedenen Implementierungstests mitgeteilt werden. Die MAC-Berechnung bzw. Verifikation findet auf Sensorseite (A) und Steuergeräteseite (B) im Wesentlichen gleich statt.

Figur 5 zeigt eine schematische Darstellung zur Erläuterung eines

Integritätsschutz der Sensordaten durch Message Authentication Codes EMAC oder CMAC:

A : Berechne 64 bit MAC-Wert mittels gemeinsamen Schlüssel K = $K_{AB,MAC}$, entweder $K_{AB,MAC} = K_{AB,MAC1}$, $K_{AB,MAC2}$ bei EMAC oder nur $K_{AB,MAC} = K_{AB,MAC1}$ bei CMAC aus den t Input Blöcken x = $(x_1,..., x_t)$ jeweils der Länge n:

$$MAC_K(x) := \begin{cases} EMAC_K(x) \\ CMAC_K(x) \end{cases}$$

Sende MAC-Wert zusammen mit den Message Texten x = ($x_1$, ..., $x_t$) an B A -> B: $x_1$,.., $x_t$, $MAC_K(x)$ t x n bits, m bits = 2048 bits, 64 bits

B: erhält die Message Texte $x_1$,..., $x_t$ im Klartext, kann diese sofort zur Weiterverarbeitung ohne Latenzverzögerung weiterleiten und berechnet seinerseits $MAC_K(x)$ und vergleicht abschließend mit dem übertragenen MAC-Wert von A. Im Fall der Nichtgleichheit wird ein Fehlersignal erzeugt, welches geeignet zu behandeln ist.

Im Folgenden wird als weiterer Teil des Sicherheitsgesamtkonzepts ein Verfahren zur Verhinderung von Replay-Attacken beschrieben. Da ein Message Authentication Code immer unabhängig von der Semantik der Daten sein sollte, wird wohlweislich in die Konstruktion von MACs kein zeitlich abhängiger State eingebaut. Wenn die Daten x = ($x_1$,..., $x_t$) in obigem Protokoll also nur reine Druckdaten wären, so könnte ein Angreifer / Tuner für ihn interessante Motorsituationen bzw. Druckverläufe (Vollgas) aufzeichnen und später wieder einspielen (re-play). Um dieses Szenario zu verhindern, werden zusätzlich zu den Daten zufällige Elemente (Zufallszahlen, zeitvariante Parameter) in den Inhalt der Nachricht eingefügt, das heißt das Integritätsschutzverfahren, der MAC, selbst, bleibt unverändert. Auf Grund von Effizienzüberlegungen und Abschätzungen der Möglichkeiten für eine lokale Datenbank mit aufgezeichneten Druckdaten wird beispielsweise vorgeschlagen, mindestens r = 32 bit Zufallsdaten $R_A$ in jedem t x n = 16 x 128 = 2048 bit Block einzufügen. Aus kryptographischer Sicht wären ggf sogar r = 48 bit Zufallsdaten zu empfehlen. Da anzunehmen ist, dass die übertragenen eigentlichen Druckdaten auch noch eine gewisse Entropie besitzen, wird im Folgenden dieser Kompromis weiterverfolgt. Die eigentliche Aufteilung, das heißt an welcher Stelle kommen Druckdaten und wann kommen Zufallsbits, ist kryptographisch unbedeutsam. Der Vorschlag für das Ausführungsbeispiel RDS-Sensor ist wie folgt: 9 bit Druckdaten x 224 + r = 32 bit Zufallszahlen ($R_A$) = 2048 = 128 x 16 = t x n. Damit werden Replay-Attacken beim Integritätsschutz wirksam verhindert. Ein Angreifer müsste mindestens $2^{32+Entropie(x)}$ Protokollläufe komplett aufzeichnen.

Im Folgenden wird demonstriert, wie man im entscheidenden vierten Schritt des erfindungsgemäßen Sicherheitskonzepts durch geschickte Verbindung beider Verfahren eine so genannte Transaktionsauthentifizierung erhält. Was zur Sensorabsicherung benötigt wird, ist mehr als eine reine Message authentication, nämlich auch die Uniqueness und Freshness. Es wird verwiesen auf "A. J. Menezes, P. C. van Oorschot, and S. A. Vanstone, Handbook of Applied Cryptography, CRC Press, 1996, Tabelle 9.10, Seite 362". Die an dieser Literaturstelle angegebene Tabelle von Typen von Authentifizierung stellt sich wie folgt dar:

|  | Identification of source | Data integrity | Timeliness or unqiueness | Defined in |
|---|---|---|---|---|
| Message auth. | Yes | Yes | - | §9.6.1 |
| Transaction auth. | Yes | Yes | Yes | §9.6.1 |
| Entity auth. | Yes | - | Yes | $10.1.1 |
| Key auth. | Yes | Yes | Desirable | $12.2.1 |

Mit dem MAC zur Integritätssicherung (erste Zeile) wird keine Freshness erreicht. Dazu wird die Authentifizierung benutzt, hier vorletzte Zeile und Entity Authentication genannt. Man sieht hier, dass am besten eine Transaction Authentication (Transaktionsauthentifizierung) wäre. Dies erfordert aber Message Authentication (Nachrichtenauthentifizierung) und entsprechend lange zeitvariante Parameter in jedem Paket. Also etwa ein MAC über die Druckdaten und einen ausreichend langen Zeitstempel oder einen (synchronisierten) Zähler. Da man auf dem Sensor standardmäßig weder eine Uhr noch einen synchronen Counter hat, wurde deshalb die Kombination aus Zeile 3 (entity authentication, Authentifizierung) und Zeile 1 (message authentication, Integritätsschutz) gewählt.

An dieser Stelle kommt die entscheidende Verbindung beider Protokolle. Bei der Authentifizierung schickt das Steuergerät B z.B. eine Zufallszahl $R_B$ an den Sensor A. Beim Integritätsschutz sendet der Sensor eine Zufallszahl $R_A$ an das Steuergerät. In der DE-102009002396 werden nun für $R_A$ zu Beginn die 32 least significant bits von $R_B$ verwendet und in jedem Schritt, das heißt alle t x n = 2048 bit, der Wert von $R_A$ um Eins nach oben gezählt. Dadurch sind beide Protokolle kryptographisch sicher verbunden. Einem Angreifer nützt die Kenntnis des als Sequence Counter verwendeten lsb($R_B$) nichts, da dieser ja bei jeder Authentifizierung neu vom Steuergerät gewählt wird. Darüberhinaus entfällt auf Sensorseite A die Implementierung eines Zufallszahlengenerators, da alle Zufallszahlen vom Steuergerät B kommen. Auf Steuergeräten gibt es jedoch heute schon deterministische RNGs.

Eine wichtige Frage für eine solche Implementierung ist nun, wie oft man den Integritätsschutz-Protokollschritt durchführen kann, ohne dass es zu einer Wiederholung des Sequence Counters $R_A$ kommt. Es wird angenommen, dass der 32 bit Counter einfach überläuft (unsigned int wrap), das heißt man kann $2^{32}$ x (2048 - 32) bit von Druckdaten übertragen. Bei einer Datenübertragungsrate von 8000 x 9 bit pro Sekunde kommt es zu einer Wiederholung des Counters nach

$$\frac{2^{32} \times (2^{10} - 2^5)}{8000 \times 9s^{-1}} \approx 5{,}9 \times 10^7\, s \approx 684 Tage$$

Nach dieser Zeit sollte spätestens eine Re-Authentifizierung erfolgen. Das Steuergerät B sendet ja selbst die Zufallszahl $R_B$ an den Sensor, damit kann es auch den Startwert für den Sequence Counter $R_A = \text{lsb}_{31\ldots0}(R_B)$ berechnen. Mit jedem Datenpaket, das heißt alle t x n bit, erhält das Steuergerät einen neuen Wert $R'_A$. Falls der übermittelte Wert $R'_A$ innerhalb eines gewissen Fensters von $[R_A, R_A + \Delta R_A]$ ist, beispielsweise $\Delta R_A := 3$, dann akzeptiert das Steuergerät diesen Sequence Counter und setzt $R_A := R'_A + 1$. Wichtig ist, dass der Sensor von sich aus den Sequence Counter nicht resetten kann, vgl. schlechte Designlösung bei KeeLoq. Im Normalfall, das heißt ohne Paketverluste, sollte man mit $\Delta R_A := 0$ auskommen, das heißt $R_A$ wird mit jedem Paket nur um Eins inkrementiert.

An dieser Stelle wird ausdrücklich darauf hingewiesen werden, dass eine Transaktionsauthentifizierung, das heißt Integrität des Senders, Integrität der Daten sowie die Freshness, entweder mit einem bidirektionalen Kommunikationsprotokoll (Challenge-Response) oder mit einem globalen, unabhängigem Time Stamp oder Sequence Counter erreicht werden können. Der Claimant / Prover, in diesem Fall der Sensor, darf nicht in der Lage sein, den Counter oder die Uhr zu resetten. Dies kann wie im Fall von KeeLoq zu Denial of Service Attacken führen. Der Counter wird nur in einem bestimmten Gültigkeitswindow akzeptiert, der Angreifer manipuliert den Counter so, dass er immer ungültig ist. Daraus folgend wird der Sensor nicht akzeptiert oder muss neu angelernt werden. Bei Wegfahrsperren wird davon ausgegangen, dass der sich authentifizierende Fahrzeugschlüssel selbst tamper resistant ist, und auf diese Weise keine unnatürliche Counter erzeugt werden können. Sollte der interne Counter eines Fahrzeugschlüssels um mehrere 100000 vom letzten autorisierten Counter abweichen, so muss meist der Fahrzeugschlüssel neu angelernt werden. Während die Verknüpfung von Authentifizierung des Sensors und Integritätsschutz der Sensordaten gemäß DE-102009002396 also eine erhöhte Sicherheit des Gesamtskonzepts bewirkt, ist eine weitere Problematik noch ungelöst. Ein Verlust eines geheimen Schlüssels durch Seitenkanalattacken (side channel attacks, SCA), wie z.B. Differentieller Leistungs-Analyse (Differential Power Analysis DPA), ist nicht auszuschließen. Aus der bisher beschriebenen Konstruktion lässt sich also die folgende Fragestellung ableiten: wie verhalten sich die gewünschten Eigenschaften des Gesamtprotokolls, wenn ein Teil der Geheimnisse bekannt wird (hier: Verlust einer der Schlüssel Kauth bzw. Kmac), z.B. durch Seitenkanalangriffe? Im bisher vorgeschlagenen Protokoll führt ein solcher Bruch eines Teilprotokolls zum Bruch des Gesamtprotokolls. Für das bisher vorgestellte Sicherheitskonzept wäre eine sogenannte Session Splitting Attack möglich, eine Attacke, welche unter Ausnutzung des Bruches einer der geheimen Schlüssel das gesamte Sicherheitskonzept aushebelt. Dabei kann der Angreifer z.B. nach Bruch des Integritätsschutzes (Kmac bekannt) die Transaktion (d.h. die Sitzung) aufteilen: er berechnet die Werte für den Integritätsschutz für von ihm gewählte Daten selbst (da Kmac bekannt) und benutzt die Originalquelle, um das Challenge-Response Protokoll erfolgreich zu absolvieren.

SCAs ließen sich beispielsweise erschweren, indem die minimal zulässige Zeit zwischen zwei Teilprotokollabläufen erhöht wird. Dies hat eine Senkung der möglichen Samplerate während des Angriffs zur Folge und erhöht somit den Zeitaufwand für einen erfolgreichen Angriff. Während einer Erhöhung dieses minimalen Zeitraums beim Teilprotokoll Integritätssicherung enge Grenzen durch die benötigte Datenrate gesetzt sind, kann bei der Authentisierung ein sehr viel höherer Wert verwendet werden.

Das im folgenden beschriebene Konzept stellt eine effektive und effiziente Maßnahme gegen den Bruch des Gesamtprotokolls bei erfolgreichen Session-Splitting-Attacken (z.B. SCA-Angriffen) gegen ein Teilprotokoll dar. Es wird dabei in Abwandlung des bisher beschriebenen Protokolls vorgeschlagen, die beide Teilprotokolle so miteinander zu verbinden, dass z.B. die Kenntnis von Kmac (z.B. durch SCA, die hier schwerer verhindert werden können als beim anderen Teilprotokoll) keinen Bruch des Gesamtprotokolls nach sich zieht. Die vorgeschlagene Änderung erhält die positiven Eigenschaften des ursprünglichen Protokolls bezüglich Ressourcen und Sicherheit. Grundlage der vorgeschlagenen Variante ist die sichere Ableitung eines geheimen Wertes aus der Challenge und aus $K_{auth}$. Dieser Wert dient dann als Initialwert $R_{a0}$ des Nonces (number only used once) $R_a$, welches in jede MAC-Berechnung eingeht. Im Originalprotokoll (DE-102009002396) wird dieser Initialwert direkt aus der Challenge gebildet, einem dem Angreifer bekannten Wert.

Figur 6, bzw. Figuren 6a und 6b, zeigen eine schematische Darstellung zur Erläuterung eines Gesamtprotokolls einer Verbindung von Integritätsschutz und Authentifizierung zur Transaktionssicherheit der Sensordaten in der neu vorgeschlagenen Variante. Dabei ist die Kommunikation des Sensors A mit dem Steuergerät B dargestellt. Die Sensordaten des Sensors A an das Steuergerät B sind mit x bezeichnet. Der Sensor A und das Steuergerät B verfügen über einen gemeinsamen Schlüssel $K_{AB, Auth}$, z.B. einen 128 bit AES-Schlüssel, für die Authentifizierung sowie über einen gemeinsamen Schlüssel $K_{AB,MAC}$, z.B. wiederum einen 128 bit AES-Schlüssel, für den Message Authentication Code CMAC (im alternativen Fall des Message Authentication Code EMAC wären es zwei Schlüssel $K_{AB,MAC1}$ und $K_{AB,MAC2}$).

Figur 6a zeigt erste Schritte des Sicherheitsgesamtkonzepts, genauer die Beschreibung eines Challenge-Response-Verfahrens. In einem ersten Schritt erzeugt das Steuergerät B eine kryptographisch sichere 64 bit Zufallszahl $R_B$ und sendet diese konkateniert mit der Identität $ID_B$ an den Sensor A: B -> A: $R_B \parallel ID_B$.

Der Sensor A verschlüsselt mit einem symmetrischen AES-Schlüssel $K_{AB,Auth}$ das empfangene Datenpaket $(R_B \parallel ID_B)$. Von dem entstehenden Ergebnis $Enc_{KAB,Auth}(R_B \parallel ID_B)$ der Länge 128 bit werden die 64 msb (most significant bits) genommen und zusammen mit der Identität $ID_A$ an das Steuergerät B zurückgesendet: A -> B : $msb_{127...64}[EnC_{K\,AB,Auth}(R_B \parallel ID_B)] \parallel ID_A$.

Gleich nachdem die Daten $R_B \parallel ID_B$ an den Sensor geschickt wurden, kann das Steuergerät B seinerseits damit beginnen $msb_{127...64}[Enc_{K\,AB,Auth}(R_B \parallel ID_B)]$ zu berechnen. Es vergleicht dann die empfangenen Daten, sowohl $msb_{127...64}[Enc_{K\,AB,Auth}(R_B \parallel ID_B)]$ als auch $ID_A$. Nur im Fall, das je beide Werte übereinstimmen, wird das Protokoll fortgesetzt, der Sensor ist gegenüber dem Steuergerät authentifiziert. Im Fall, dass nur ein Wert abweicht, wird eine Fehlermeldung "Authentication of sensor failed" generiert.

Figur 6b zeigt die Verknüpfung von Authentifizierung und Integritätsschutz unter Ableitung des Initialwertes $R_{a0}$ der Nonce (number only used once) $R_a$ aus der Challenge und aus $K_{auth}$.

Wie in Figur 6a zu sehen, wird $R_b$ zusammen mit $ID_b$ im Sensor bereits verschlüsselt, um die Authentifizierungsantwort auszurechnen. Als Response im Challenge-Response-Verfahren der Authentifizierung wird übertragen res := $MSB_{64}(Enc\,Kauth(Rb \parallel IDb))$; die letzten 8 Bytes werden durch Trunkierung geheim gehalten. Das initiale $R_a$ ($R_{a0}$) wird nun aus $Enc_{KAB,Auth}(R_B \parallel ID_B)$ abgeleitet, z.B. als $LSB_{64}(Enc\,K_{auth}(R_b \parallel ID_b))$, es wird also z.B. der in der Challenge-Response trunkierte Teil von $Enc\,K_{auth}(R_b \parallel ID_b)$ (statt eines Teiles von $R_b$ wie in der DE-102009002396) als $R_a$ herangezogen. Der Sensor speichert also z.B. wie in Figur 6b gezeigt die 64 least significant bits (lsb) von $Enc_{K\,AB,Auth}(R_B \parallel ID_B) \parallel ID_A$ als $R_A$, bzw. als Initialwert $R_{a0}$ der Nonce $R_A$ ab.

Aus Gründen der Effizienz wird also ein bereits berechneter Teil aus dem Challenge-Response-Verfahren der Authentifizierung, z.B. der Teil, welcher nicht versendet wurde (response truncation / Anwort-Trunkierung), als Initialwert $R_{a0}$ verwendet. Die Sensordaten sind wie beschrieben mit x bezeichnet. Im Folgenden können verschiedene Möglichkeiten zur Berechnung eines Message Authentication Codes, z.B. EMAC bzw. CMAC eingesetzt werden, wie oben beschrieben. Die Sensordaten x, konkateniert mit zeitvarianten Parametern, werden zusammen den $msb_{64}$ des Message Authentication Codes $MAC_{KMac}$ an das Steuergerät gesendet, siehe Figur 6b. Im Originalprotokoll werden die zeitvarianten Parameter, bzw. die aktuelle Nonce unverschlüsselt übertragen. Dies ist im geänderten, hier vorgeschlagenen Protokoll jedoch nicht mehr möglich, da dies die Antwort-Trunkierung (response truncation) der Authentifizierung schwächen würde. Um die Antwort-Trunkierung nicht zu schwächen, wird in einer bevorzugten Ausgestaltung zusätzlich statt der $R_a$ nun der Wert c als unsigned integer mit Überlauf, mit c:= $R_a - R_{a0}$ übertragen und weiterhin $R_a$ in der MAC-Berechnung verwendet, siehe Figur 6b:

$$A \rightarrow B: x \parallel lsb32(c) \parallel msb64(MAC_{Kmac}(x \parallel RA)).$$

Abschließend wird der Sequence Counter $R_A$ um Eins erhöht.

Das Steuergerät B erhält die Sensordaten x und verarbeitet diese und / oder gibt diese weiter. Mit den empfangenen Daten wird nun auf Seite des Steuergerätes seinerseits der MAC-Wert berechnet und mit dem empfangenen MAC-Wert verglichen. Da dem Steuergerät der Ausgangswert für c, bzw. $R_A$ bekannt ist, kann es überprüfen, ob der gesendete Sequence Counter c innerhalb eines vorgegebenen Intervalles liegt. Falls ja, akzeptiert es den und führt obige Berechnungen durch. Falls nein, dann haben Sensor A und Steuergerät B offensichtlich zu viele Pakete verloren bzw. die Synchronität ging verloren. Dann sollte eine Re-Authentifizierung erfolgen, u. a. zur Neuaushandlung von c, bzw. $R_a$. Nach der MAC-Berechnung und Vergleich wird c, bzw. $R_A$ um Eins inkrementiert.

Allgemeiner kann man formulieren, dass für eine Berechnung der zeitvarianten Parameter, welche im Rahmen der Transaktionsauthentifizierung, bzw. des Sensordaten-Integritätsschutzes verwendet werden, zumindest ein zweiter Teil der kryptographischen Authentifizierungsnachricht und für eine Berechnung des kryptographischen Integritätsschutzes zumindest ein dritter Teil der kryptographischen Authentifizierungsnachricht herangezogen wird, während im Rahmen der Sensorauthentifizierung ein erster Teil der kryptographischen Authentifizierungsnachricht $MSB_{64}\,Enc_{KAB,Auth}(RB \parallel ID_B)$ versendet wurde. In dem in Figur 6 gezeigten Beispiel entspricht dem zweiten und dem dritten Teil $LSB_{64}\,Enc_{KAB,Auth}(RB \parallel ID_B)$. Der zweite und der dritte Teil müssen dabei allerdings nicht identisch sein. Es kann vorteilhaft sein, wenn sich der erste Teil nicht mit dem zweiten und dem dritten Teil überschneidet oder zumindest nicht mit diesen identisch ist. Der zweite und dritte Teil können identisch sein, sich überschneiden oder getrennte Teile von $Enc_{KAB,Auth}(RB \parallel ID_B)$ darstellen.

Der aktuelle Parameter $R_a$ wird bei jeder Sensordaten-Transaktion berechnet, die zeitvarianten Parameter c entsprechen bei jeder Sensordaten-Transaktion der Differenz aus den initialen Wert $R_{a0}$, also im Beispiel $LSB_{64}$ $Enc_{KAB, Auth}(RB \| ID_B)$, und dem aktuellen Parameter der vorherigen Sensordatentransaktion.

Zu dem vorgestellten Ausführungsbeispiel des erfindungsgemäßen Sicherheitsgesamtkonzepts gibt es Alternativen.

In jedem Schritt der Transaktionsauthentifizierung wird im oben vorgestellten Ausführungsbeispiel $R_A$ um 1 inkrementiert. Auch andere Inkrementierungen oder auch andere Veränderungen nach festgelegten Regeln sind hierfür denkbar und können vorteilhaft sein. Auch die hier präferierten (kryptografischen) Methoden zur Authentifizierung und zum Integritätsschutz, bzw. zur Transaktions-Authentifizierung, sind lediglich beispielhaft und lassen sich auch durch andere in der Beschreibung genannte Alternativ-Verfahren oder auch nicht genannte, vergleichbare Methoden ersetzen.

Die Zahl $R_B$ wurde im vorgestellten Konzept Zufallszahl genannt. Allgemeiner ist sie auch als Nonce (Number only used once - einmalig verwendete Zahl) vorsehbar, z.B. neben Zufallszahl auch als Zeitstempel oder Sequenzzähler.

**Patentansprüche**

1. Verfahren zu einem Manipulationsschutz von Sensordaten (x) eines Sensors (A), wobei im Rahmen einer Authentifizierung des Sensors (A) eine einmalig verwendete Zahl ($R_B$) von einem Steuergerät (B) an den Sensor (A) geschickt wird und der Sensor (A) eine kryptographische Authentifizierungsnachricht unter Verwendung der einmalig verwendeten Zahl ($R_B$) generiert und zumindest einen ersten Teil der kryptographischen Authentifizierungsnachricht an das Steuergerät (B) sendet, wobei die Sensordaten (x) mit einem kryptographischen Integritätsschutz versehen werden, den Sensordaten (x) zeitvariante Parameter (c) hinzugefügt werden und wobei die Sensordaten (x) mit dem kryptographischen Integritätsschutz und den hinzugefügten zeitvarianten Parametern (c) von dem Sensor (A) an das Steuergerät (B) geschickt werden,

   **gekennzeichnet dadurch, dass**
   für eine Berechnung der zeitvarianten Parameter (c) zumindest ein zweiter Teil der kryptographischen Authentifizierungsnachricht und für eine Berechnung des kryptographischen Integritätsschutzes zumindest ein dritter Teil der kryptographischen Authentifizierungsnachricht verwendet wird, wobei der zweite Teil der kryptographischen Authentifizierungsnachricht und der dritte Teil der kryptographischen Authentifizierungsnachricht nicht versendet werden.

2. Verfahren nach Anspruch 1, **dadurch gekennzeichnet, dass** die zeitvarianten Parameter (c) bei jeder Sensordaten-Transaktion verändert werden.

3. Verfahren nach Anspruch 2, **dadurch gekennzeichnet, dass** die Veränderung der zeitvarianten Parameter (c) einer schrittweisen Inkrementierung entspricht.

4. Verfahren nach Anspruch 2, **dadurch gekennzeichnet, dass** ein aktueller Parameter ($R_a$) aus dem zweiten Teil ($R_{a0}$) der kryptographischen Authentifizierungsnachricht bei jeder Sensordaten-Transaktion berechnet wird und dass die zeitvarianten Parameter (c) für eine n-ten Sensordaten-Transaktion aus einer Differenz des aktuellen Parameters ($R_a$) und des zweiten Teils ($R_{a0}$) der kryptographischen Authentifizierungsnachricht berechnet werden.

5. Verfahren nach Anspruch 4, **dadurch gekennzeichnet, dass** der aktuelle Parameter ($R_a$) für die Berechnung des kryptographischen Integritätsschutzes herangezogen wird.

6. Verfahren nach einem der vorangegangenen Ansprüche, **dadurch gekennzeichnet, dass** die Authentifizierung des Sensors (A) nach einem Challenge-Response-Verfahren durchgeführt wird.

7. Verfahren nach einem der vorangegangenen Ansprüche, **dadurch gekennzeichnet, dass** der kryptographische Integritätsschutz der Sensordaten (x) nach einem Message-Authentication-Code-(MAC)-Verfahren durchgeführt wird.

8. Verfahren nach Anspruch 7, **dadurch gekennzeichnet, dass** als das MAC-Verfahren ein OMAC- oder ein EMAC-Verfahren verwendet wird.

9. Verfahren nach Anspruch 2, **dadurch gekennzeichnet, dass** die zeitvarianten Parameter (c) durch Zeitstempel oder Sequenzzähler oder Zufallszahlen verändert werden.

**10.** Verfahren nach einem der vorangegangenen Ansprüche, **dadurch gekennzeichnet, dass** sich der erste Teil der kryptographischen Authentifizierungsnachricht und der zweite Teil der kryptographischen Authentifizierungsnachricht nicht überschneiden und dass sich der erste Teil der kryptographischen Authentifizierungsnachricht und der dritte Teil der kryptographischen Authentifizierungsnachricht nicht überschneiden.

**11.** Sensor (A), welcher Mittel aufweist, im Rahmen einer Authentifizierung des Sensors (A) eine einmalig verwendete Zahl ($R_B$) von einem Steuergerät (B) zu empfangen, eine kryptographische Authentifizierungsnachricht unter Verwendung der einmalig verwendeten Zahl ($R_B$) zu generieren und zumindest einen ersten Teil der kryptographischen Authentifizierungsnachricht an das Steuergerät (B) zu senden, sowie Mittel aufweist, die Sensordaten (x) mit einem kryptographischen Integritätsschutz zu versehen, den Sensordaten (x) zeitvariante Parameter (c) hinzuzufügen und die Sensordaten (x) mit dem kryptographischen Integritätsschutz und den hinzugefügten zeitvarianten Parametern (c) von dem Sensor (A) an das Steuergerät (B) zu schicken,
**gekennzeichnet dadurch, dass**
der Sensor (A) Mittel aufweist, für eine Berechnung der zeitvarianten Parameter (c) zumindest einen zweiten Teil der kryptographischen Authentifizierungsnachricht und für eine Berechnung des kryptographischen Integritätsschutzes zumindest einen dritten Teil der kryptographischen Authentifizierungsnachricht zu verwenden, wobei der Sensor (A) Mittel aufweist, den zweiten Teil der kryptographischen Authentifizierungsnachricht und den dritten Teil der kryptographischen Authentifizierungsnachricht nicht zu versenden.

**12.** Sensor (A) nach Anspruch 11, **dadurch gekennzeichnet, dass** der Sensor (A) Mittel aufweist, die zeitvarianten Parameter (c) bei jeder Sensordaten-Transaktion zu verändern.

**13.** Sensor (A) nach Anspruch 12, **dadurch gekennzeichnet, dass** die Veränderung der zeitvarianten Parameter (c) einer schrittweisen Inkrementierung entspricht.

**14.** Sensor (A) nach Anspruch 12, **dadurch gekennzeichnet, dass** ein aktueller Parameter ($R_a$) aus dem zweiten Teil ($R_{a0}$) der kryptographischen Authentifizierungsnachricht bei jeder Sensordaten-Transaktion berechnet wird und dass die zeitvarianten Parameter (c) für eine n-ten Sensordaten-Transaktion aus einer Differenz des aktuellen Parameters ($R_a$) und des zweiten Teils ($R_{a0}$) der kryptographischen Authentifizierungsnachricht berechnet werden.

**15.** Steuergerät (B), welches Mittel aufweist, im Rahmen einer Authentifizierung eines Sensors (A) eine einmalig verwendete Zahl ($R_B$) zu generieren und an den Sensor (A) zu senden, von dem Sensor (A) zumindest einen ersten Teil einer unter Verwendung der einmalig verwendeten Zahl ($R_B$) generierten kryptographischen Authentifizierungsnachricht zu empfangen, eine kryptographische Vergleichs-Authentifizierungs-nachricht selbst zu generieren und den empfangenen ersten Teil der kryptographischen Authentifizierungsnachricht mithilfe der selbst generierten kryptographischen Vergleichs-Authentifizierungsnachricht auszuwerten, sowie Mittel aufweist, die mit einem kryptographischen Integritätsschutz und zeitvarianten Parametern (c) versehenen Sensordaten (x) auszuwerten,
**gekennzeichnet dadurch, dass**
das Steuergerät (B) Mittel aufweist, für eine Auswertung der zeitvarianten Parameter (c) zumindest einen zweiten Teil der selbst generierten kryptographischen Vergleichs-Authentifizierungsnachricht und für eine Auswertung des kryptographischen Integritätsschutzes zumindest einen dritten Teil der selbst generierten kryptographischen Vergleichs-Authentifizierungsnachricht zu verwenden.

## Claims

**1.** Method for protecting sensor data (x) of a sensor (A) against manipulation, wherein in the context of an authentication of the sensor (A) a number ($R_B$) that is used once is sent from a control unit (B) to the sensor (A) and the sensor (A) generates a cryptographic authentication message using the number ($R_B$) that is used once, and transmits at least a first part of the cryptographic authentication message to the control unit (B), wherein the sensor data (x) are provided with a cryptographic integrity protection, time-variant parameters (c) are added to the sensor data (x) and wherein the sensor data (x) with the cryptographic integrity protection and the added time-variant parameters (c) are sent from the sensor (A) to the control unit (B),
**characterized in that**
at least a second part of the cryptographic authentication message is used for a calculation of the time-variant parameters (c) and at least a third part of the cryptographic authentication message is used for a calculation of the cryptographic integrity protection, wherein the second part of the cryptographic authentication message and the third part of the cryptographic authentication message are not transmitted.

**2.** Method according to Claim 1, **characterized in that** the time-variant parameters (c) are altered in each sensor data transaction.

**3.** Method according to Claim 2, **characterized in that** the alteration of the time-variant parameters (c) corresponds to a step-by-step incrementation.

**4.** Method according to Claim 2, **characterized in that** a current parameter ($R_a$) is calculated from the second part ($R_{a0}$) of the cryptographic authentication message in each sensor data transaction, and **in that** the time-variant parameters (c) for an nth sensor data transaction are calculated from a difference between the current parameter ($R_a$) and the second part ($R_{a0}$) of the cryptographic authentication message.

**5.** Method according to Claim 4, **characterized in that** the current parameter ($R_a$) is used for the calculation of the cryptographic integrity protection.

**6.** Method according to any of the preceding claims, **characterized in that** the authentication of the sensor (A) is carried out according to a challenge-response method.

**7.** Method according to any of the preceding claims, **characterized in that** the cryptographic integrity protection of the sensor data (x) is carried out according to a message authentication code (MAC) method.

**8.** Method according to Claim 7, **characterized in that** an OMAC method or an EMAC method is used as the MAC method.

**9.** Method according to Claim 2, **characterized in that** the time-variant parameters (c) are altered by time stamps or sequence counters or random numbers.

**10.** Method according to any of the preceding claims, **characterized in that** the first part of the cryptographic authentication message and the second part of the cryptographic authentication message do not overlap, and **in that** the first part of the cryptographic authentication message and the third part of the cryptographic authentication message do not overlap.

**11.** Sensor (A) having means for receiving a number ($R_B$) that is used once from a control unit (B) in the context of an authentication of the sensor (A), for generating a cryptographic authentication message using the number ($R_B$) that is used once, and for transmitting at least a first part of the cryptographic authentication message to the control unit (B), and having means for providing the sensor data (x) with a cryptographic integrity protection, for adding time-variant parameters (c) to the sensor data (x), and for sending the sensor data (x) with the cryptographic integrity protection and the added time-variant parameters (c) from the sensor (A) to the control unit (B),
**characterized in that**
the sensor (A) has means for using at least a second part of the cryptographic authentication message for a calculation of the time-variant parameters (c) and at least a third part of the cryptographic authentication message for a calculation of the cryptographic integrity protection, wherein the sensor (A) has means for not transmitting the second part of the cryptographic authentication message and the third part of the cryptographic authentication message.

**12.** Sensor (A) according to Claim 11, **characterized in that** the sensor (A) has means for altering the time-variant parameters (c) in each sensor data transaction.

**13.** Sensor (A) according to Claim 12, **characterized in that** the alteration of the time-variant parameters (c) corresponds to a step-by-step incrementation.

**14.** Sensor (A) according to Claim 12, **characterized in that** a current parameter ($R_a$) is calculated from the second part ($R_{a0}$) of the cryptographic authentication message in each sensor data transaction, and **in that** the time-variant parameters (c) for an nth sensor data transaction are calculated from a difference between the current parameter ($R_a$) and the second part ($R_{a0}$) of the cryptographic authentication message.

**15.** Control unit (B) having means for generating a number ($R_B$) that is used once in the context of an authentication of a sensor (A) and for transmitting said number to the sensor (A), for receiving from the sensor (A) at least a first part of a cryptographic authentication message generated using the number ($R_B$) that is used once, for self-generating a cryptographic comparison authentication message and for evaluating the received first part of the cryptographic authentication message with the aid of the self-generated cryptographic comparison authentication message, and having means for evaluating the sensor data (x) provided with a cryptographic integrity protection and time-variant parameters (c)

**characterized in that**

the control unit (B) has means for using at least a second part of the self-generated cryptographic comparison authentication message for an evaluation of the time-variant parameters (c) and at least a third part of the self-generated cryptographic comparison authentication message for an evaluation of the cryptographic integrity protection.


**Revendications**

1. Procédé de protection contre les manipulations de données de capteur (x) d'un capteur (A), un nombre ($R_B$) utilisé une seule fois étant envoyé d'un contrôleur (B) à un capteur (A) dans le cadre d'une authentification du capteur (A) et le capteur (A) générant un message d'authentification cryptographique en utilisant le nombre ($R_B$) utilisé une seule fois et envoyant au moins une première partie du message d'authentification cryptographique au contrôleur (B), les données de capteur (x) étant dotées d'une protection d'intégrité cryptographique, des paramètres variables dans le temps (c) étant ajoutés aux données de capteur (x) et les données de capteur (x) étant envoyées du capteur (A) au contrôleur (B) avec la protection d'intégrité cryptographique et les paramètres variables dans le temps (c) ajoutés,

   **caractérisé en ce que**

   au moins une deuxième partie du message d'authentification cryptographique est utilisée pour un calcul des paramètres variables dans le temps (c) et au moins une troisième partie du message d'authentification cryptographique pour un calcul de la protection d'intégrité cryptographique, la deuxième partie du message d'authentification cryptographique et la troisième partie du message d'authentification cryptographique n'étant pas envoyées.

2. Procédé selon la revendication 1, **caractérisé en ce que** les paramètres variables dans le temps (c) sont modifiés à chaque transaction de données de capteur.

3. Procédé selon la revendication 2, **caractérisé en ce que** la modification des paramètres variables dans le temps (c) correspond à une incrémentation pas à pas.

4. Procédé selon la revendication 2, **caractérisé en ce qu'**un paramètre actuel ($R_a$) est calculé à partir de la deuxième partie (Ra0) du message d'authentification cryptographique à chaque transaction de données de capteur et **en ce que** les paramètres variables dans le temps (c) pour une n-ième transaction de données de capteur sont calculés à partir d'une différence entre le paramètre actuel ($R_a$) et la deuxième partie (Ra0) du message d'authentification cryptographique.

5. Procédé selon la revendication 4, **caractérisé en ce que** le paramètre actuel ($R_a$) est utilisé pour le calcul de la protection d'intégrité cryptographique.

6. Procédé selon l'une des revendications précédentes, **caractérisé en ce que** l'authentification du capteur (A) est effectuée selon un procédé de défi-réponse.

7. Procédé selon l'une des revendications précédentes, **caractérisé en ce que** la protection d'intégrité cryptographique des données de capteur (x) est effectuée selon un procédé à code d'identification de message (MAC).

8. Procédé selon la revendication 7, **caractérisé en ce que** le procédé MAC utilisé est un procédé OMAC ou EMAC.

9. Procédé selon la revendication 2, **caractérisé en ce que** les paramètres variables dans le temps (c) sont modifiés par un horodateur ou un compteur de séquences ou des nombres aléatoires.

10. Procédé selon l'une des revendications précédentes, **caractérisé en ce que** la première partie du message d'authentification cryptographique et la deuxième partie du message d'authentification cryptographique ne se recoupent pas et **en ce que** la première partie du message d'authentification cryptographique et la troisième partie du message d'authentification cryptographique ne se recoupent pas.

11. Capteur (A), qui possède des moyens conçus pour, dans le cadre d'une authentification du capteur (A), recevoir un nombre ($R_B$) utilisé une seule fois de la part d'un contrôleur (B), générer un message d'authentification cryptographique en utilisant le nombre ($R_B$) utilisé une seule fois et envoyer au moins une première partie du message d'authentification cryptographique au contrôleur (B), et qui possède aussi des moyens pour doter les données de capteur (x) d'une protection d'intégrité cryptographique, ajouter aux données de capteur (x) des paramètres variables dans le temps (c) et envoyer les données de capteur (x) du capteur (A) au contrôleur (B) avec la protection d'intégrité cryptographique et les paramètres variables dans le temps (c) ajoutés,

**caractérisé en ce que**

le capteur (A) possède des moyens pour utiliser au moins une deuxième partie du message d'authentification cryptographique pour un calcul des paramètres variables dans le temps (c) et au moins une troisième partie du message d'authentification cryptographique pour un calcul de la protection d'intégrité cryptographique, le capteur (A) possédant des moyens pour ne pas envoyer la deuxième partie du message d'authentification cryptographique et la troisième partie du message d'authentification cryptographique.

12. Capteur (A) selon la revendication 11, **caractérisé en ce que** le capteur (A) possède des moyens pour modifier les paramètres variables dans le temps (c) à chaque transaction de données de capteur.

13. Capteur (A) selon la revendication 12, **caractérisé en ce que** la modification des paramètres variables dans le temps (c) correspond à une incrémentation pas à pas.

14. Capteur (A) selon la revendication 12, **caractérisé en ce qu'**un paramètre actuel ($R_a$) est calculé à partir de la deuxième partie ($R_{a0}$) du message d'authentification cryptographique à chaque transaction de données de capteur et **en ce que** les paramètres variables dans le temps (c) pour une n-ième transaction de données de capteur sont calculés à partir d'une différence entre le paramètre actuel ($R_a$) et la deuxième partie ($R_{a0}$) du message d'authentification cryptographique.

15. Contrôleur (B), qui possède des moyens conçus pour, dans le cadre d'une authentification d'un capteur (A), générer un nombre ($R_B$) utilisé une seule fois et l'envoyer au capteur (A), recevoir de la part du capteur (A) au moins une première partie du message d'authentification cryptographique généré en utilisant le nombre ($R_B$) utilisé une seule fois, générer lui-même un message d'authentification cryptographique comparatif et interpréter la première partie reçue du message d'authentification cryptographique à l'aide du message d'authentification cryptographique comparatif généré lui-même, et qui possède aussi des moyens pour interpréter les données de capteur (x) dotées d'une protection d'intégrité cryptographique et de paramètres variables dans le temps (c),

**caractérisé en ce que**

le contrôleur (B) possède des moyens pour utiliser au moins une deuxième partie du message d'authentification cryptographique comparatif généré lui-même pour une interprétation des paramètres variables dans le temps (c) et au moins une troisième partie du message d'authentification cryptographique comparatif généré lui-même pour une interprétation de la protection d'intégrité cryptographique.

Figur 1

Figur 2

$K_{AB,Auth}$

$R_B \parallel \text{ID}_B$

$\text{Enc}_{K_{AB,Auth}}(R_B \parallel \text{ID}_B) \parallel \text{ID}_A$

$K_{AB,Auth}$

A

B

Figur 3

$R_B$

$R_B$

$\text{Enc}_{K_{AB,Auth}}(R_B)$

$\text{Enc}_{K_{AB,Auth}}(R_B)$

$K_{AB,Auth}$

O

B

Figur 4

$K_{AB,MAC}$

$x = (x_1, ..., x_t) \parallel \text{MAC}_{K_{AB,MAC}}(x)$

$t \times n \text{ bit} \parallel m \text{ bit}$

$K_{AB,MAC}$

A

B

Figur 5

$$RB \parallel ID_B$$
$$(64 \text{ bit} \parallel 32 \text{ bit})$$

$K_{AB,Auth}$

A

$$msb_{127\ldots64}Enc_{KAB,\,Auth}(RB \parallel ID_B) \parallel ID_A$$
$$(64 \text{ bit} \parallel 32 \text{ bit})$$

$K_{AB,Auth}$

B

Figur 6a

$R_{A0} := \text{lsb}_{63\ldots0} \text{Enc}_{KAB,Auth}(RB \parallel ID_B)$
$c := 0$

```
    ┌──────────────────────┐                                      ┌──────────────────────┐
    │  ┌────────────────┐  │  x || lsb₃₂(c) || msb₆₄(MAC_Kmac     │  ┌────────────────┐  │
┌──▶│  │  K_AB, MAC     │  │ ───────────(x||R_A)) ──────────────▶ │  │  K_AB, MAC     │  │
│   │  └────────────────┘  │                                      │  └────────────────┘  │
│   │   R_A = R_A0 + c      │                                      │   R_A = R_A0 + c      │
│   │                       │                                      │                       │
│   │          A            │                                      │          B            │
│   └──────────────────────┘                                      └──────────────────────┘
│
└─ c := c+1
```

Message on arrow: $x \parallel \text{lsb}_{32}(c) \parallel \text{msb}_{64}(MAC_{Kmac}(x \parallel R_A))$

Box A: $K_{AB, MAC}$ , $R_A = R_{A0} + c$ , A

Box B: $K_{AB, MAC}$ , $R_A = R_{A0} + c$ , B

$c := c+1$

Figur 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009002396

**In der Beschreibung aufgeführte Nicht-Patentliteratur**

- **H. ÇAM U. A.** Energy Efficient Security Protocol for Wireless Sensor Networks. *Vehicular Technology Conference, VTC 2003-FALL,* 06. Oktober 2003, vol. 5, 2981-2984
- PRESENT: An ultra-lightweight block cipher. **A. BOGDANOV ; L.R. KNUDSEN ; G. LEANDER ; C. PAAR ; A. POSCHMANN ; M.J.B. ROBSHAW ; Y. SEURIN ; C. VIKKELSOE.** Proceedings of CHES 2007, volume 4727 of Lecture Notes in Computer Science. Springer-Verlag, 2007, 450-467
- ISO/IEC 9798-2, Information technology - Security techniques - Entity Authentication. *Mechanisms using Symmetrie encipherment. algorithms ISO/IEC,* 1994
- **ANDREY BOGDANOV ; CHRISTOF PAAR.** On the Security and Efficiency of Real-World Lightweight Authentication Protocols. *In Secure Component and System Identification, März 2007, Workshop Record of SECSI, Berlin,* 17. Marz 2008
- **WALTER FUMY ; HANS-PETER RIESS.** Kryptographie, Entwurf; Einsatz und Analyse symmetrischer Kryptoverfahren. R. Oldenbourg Verlag, 1994
- ISO/IEC 9798-2, Information technology - Security techniques - Entity Authentication. *Mechanisms using Symmetrie encipherment algorithms ISO/IEC,* 1994
- **COLIN BOYD ; ANISH MATHURIA.** Protocols for Authentication and Key Establishment. Springer, 2003, 31
- **JONATHAN KAHTZ ; YEHUDA LINDELL.** Introduction to Modern Cryptography. CRC Publishing, 2007, 16
- MAC algorithms. **BART PRENEEL.** Encyclopedia of Cryptography and Security. Springer, 2005, 365
- Keying hash functions for message authentication. **MIHIR BELLARE ; RAN CANETTI ; HUGO KRAWCZYK.** Proceedings of CRYPTO'96, volume 1109 of Lecture Notes in Computer Science. Springer, 1996, 1-15
- **A. J. MENEZES ; P. C. VAN OORSCHOT ; S. A. VANSTONE.** Handbook of Applied Cryptography. CRC Press, 1996, 334
- **A. J. MENEZES ; P. C. VAN OORSCHOT ; S. A. VANSTONE.** Handbook of Applied Cryptography. CRC Press, 1996, 334-335
- ISO/IEC 9797-1, Information technology - Security techniques - Message Authentication Codes (MAC). *Mechanisms using a block cipher, ISO/IEC,* 1999
- *ISO/IPC 9797, Information technology - Security techniques - Data integrity mechanisms using a cryptographic check function employing block cipher algorithm, ISO/IEC,* 1994
- **M. BELLARE ; J. KILIAN ; F.:'ROGAWAY.** The security of cipher block chaining. *Journal of Computer and System Sciences,* 2000, vol. 3 (61), 362-399
- **E. PETRANK ; C. RACKOFF.** CBC MAC for real-time data sources. *Journal of Cryptology,* 2000, vol. 3 (13), 315-338
- CBC MACs for arbitrary-length messages. **J. BLACK ; P. ROGAWA.** Advances in Cryptology - CRYPTO 2000, number 1880 in Lecture Notes in Computer Science. Springer-Verlag, 2000, 197-215
- Algorithmen für eine Crypto-Library für Embedded Systems. **T. SCHÜTZE.** Technical report. Robert Bosch GmbH, 07. August 2007, 46
- OMAC: One key CBC MAC. **T. IWATA ; K. KUROSAWA.** Fast Software Encryption, number 2887 in Lecture Notes in Computer Science. Springer-Verlag, 2003, 129-153
- **MORRIS DWORKIN.** Cipher Modes of Operation: The CMAC Mode for Authentication. National Institute of Standards and Technology NIST, Mai 2005, 2, , 3
- **JONATHAN KAHTZ ; YEHUDA LINDELL.** Introduction to Modern Cryptography. CRC Publishing, 2007, 126
- **E. PETRANK ; C. RACKOFF.** CBC MAC for realtime data sources. *Journal of Cryptology,* 2000, vol. 3 (13), 315-338

- ISO/IEC 9797-2, Information technology - Security techniques - Message Authentication Codes MACs. *Mechanisms using a dedicated hash function, ISO/IEC,* 2002

- **MORRIS DWORKIN.** Cipher Modes of Operation: The CMAC Mode for Authentication. National Institute of Standards and Technology (NIST), Mai 2005
- **A. J. MENEZES ; P. C. VAN OORSCHOT ; S. A. VANSTONE.** Handbook of Applied Cryptography. CRC Press, 1996, 362